# EUROPEAN PATENT APPLICATION

(11) **EP 4 159 771 A1**
(43) Date of publication of application: **05.04.2023**
(21) Application number: 21813877.4
(22) Date of filing: 14.05.2021
(51) Int. Cl.: C08F 4/6592, C08F 4/659, C08F 4/02, C08F 4/46

(54) **MIXED CATALYTIC COMPOSITION, CATALYST COMPRISING SAME, AND METHODS FOR PREPARING SAME**

(30) Priority: 28.05.2020 KR 20200064285
(71) Applicant: Hanwha Solutions Corporation, Jung-gu Seoul 04541 (KR)
(72) Inventor: PARK, Ranwha, Daejeon 34128 (KR); PARK, Seongyeon, Daejeon 34128 (KR); LEE, Won Jong, Daejeon 34128 (KR); JEONG, Taeho, Daejeon 34128 (KR); HAN, Ji Min, Daejeon 34128 (KR)
(74) Representative: HGF
(86) International application number: PCT/KR2021/006049
(87) International publication number: WO 2021/241927

(57) **Abstract**

The present invention relates to a hybrid catalyst composition comprising different transition metal compounds, to a catalyst for olefin polymerization comprising the same, and to processes for preparing the same. Specifically, the present invention relates to a hybrid catalyst composition comprising two or more types of transition metal compounds having a non-bridged biscyclopentadienyl group with different central metals, to a catalyst for olefin polymerization comprising the same, and processes for preparing the hybrid catalyst composition and the catalyst.

## Description

### Technical Field

The present invention relates to a hybrid catalyst composition comprising different transition metal compounds, to a catalyst for olefin polymerization comprising the same, and to processes for preparing the same. Specifically, the present invention relates to a hybrid catalyst composition comprising two or more types of transition metal compounds having a non-bridged biscyclopentadienyl group with different central metals, to a catalyst for olefin polymerization comprising the same, and processes for preparing the hybrid catalyst composition and the catalyst.

### Background Art

Polyolefin-based polymers are widely used in real life as materials for shopping bags, greenhouses, fishing nets, cigarette packages, instant noodle packages, yogurt bottles, battery cases, automobile bumpers, interior parts, shoe soles, washing machines, and the like.

Conventionally, polyolefin-based polymers such as polyethylene, polypropylene, and ethylene-alpha olefin copolymers and their copolymers have been prepared using a heterogeneous catalyst such as a Ziegler-Natta catalyst made of a titanium compound and an alkyl aluminum compound.

In recent years, a method for preparing polyolefin using a metallocene catalyst, which is a homogeneous catalyst with a very high catalytic activity, has been studied. A metallocene catalyst is a compound in which a ligand such as cyclopentadienyl, indenyl, and cycloheptadienyl is coordinated to a transition metal or a transition metal halide compound. It has a sandwich structure in its basic form. Here, it has various molecular structures depending on the type of ligand and the type of core metal.

In a Ziegler-Natta catalyst as a heterogeneous catalyst, the metal component serving as the active sites is dispersed on an inert solid surface, whereby the properties of the active sites are not uniform. On the other hand, since a metallocene catalyst is a single compound having a specific structure, it is known as a single-site catalyst in which all active sites have the same polymerization characteristics.

In general, since a metallocene catalyst has no activity as a polymerization catalyst by itself, it is used together with a cocatalyst such as methyl aluminoxane. The metallocene catalyst is activated as a cation by the action of the cocatalyst. At the same time, the cocatalyst as an anion that is not coordinated with the metallocene catalyst stabilizes the unsaturated cationic active species to form a catalyst system having activity in the polymerization of various olefins.

Such a metallocene catalyst has advantages in that copolymerization is readily carried out, the three-dimensional structure of a polymer can be controlled according to the symmetry of the catalyst, and the polymer prepared thereby has a narrow molecular weight distribution with uniform distribution of a comonomer.

On the other hand, the polymers prepared by a metallocene catalyst have a shortcoming in that it has low processability despite excellent mechanical strength due to a narrow molecular weight distribution. In order to solve this shortcoming, various methods such as changing the molecular structure of a polymer or broadening the molecular weight distribution thereof have been proposed. For example, U.S. Patent No. 5,272,236 discloses a catalyst for introducing a long chain branch (LCB) as a side branch to the main chain of a polymer to improve the processability of the polymer; however, the supported catalyst has a disadvantage of low activity.

In order to solve this shortcoming of a single metallocene catalyst and to develop a catalyst with excellent activity and improved processability in a convenient way, a method of hybrid supporting metallocene catalysts (different metallocene catalysts) having different properties is proposed. For example, U.S. Patent Nos. 4,935,474, 6,828,394, and 6,894,128, Korean Patent No. 1437509, and U.S. Patent No. 6,841,631 disclose a process for producing a polyolefin having a bimodal molecular weight distribution using catalysts having different reactivities for comonomers. Although the polyolefins having a bimodal molecular weight distribution prepared in this way have improved processability, they have lower homogeneity due to different molecular weight distributions. Thus, there is a problem in that it is difficult to obtain a product having uniform physical properties after processing, and the mechanical strength is deteriorated.

Meanwhile, Korean Patent No. 1797890 discloses a hybrid metallocene catalyst in which a first transition metal compound containing a cyclopentadienyl group and an indenyl group, which are not connected by a bridge, and a second transition metal compound containing a substituted bisindenyl group connected by a silyl bridge are mixed.

In general, such a hybrid catalyst is prepared by preparing respective transition metal compounds, mixing them at a certain ratio, and then supporting them.

### Detailed Description of the Invention

### Technical Problem

An object of the present invention is to provide a hybrid catalyst composition comprising two or more types of transition metal compounds having a non-bridged biscyclopentadienyl (bisCp) group with different central metals and a catalyst for olefin polymerization comprising the same.

Another object of the present invention is to provide a process for preparing a hybrid catalyst composition by adjusting the ratio of precursors of the transition metal compounds and a process for preparing a catalyst for olefin polymerization comprising the same.

### Technical Solution

According to an embodiment of the present invention for accomplishing the object, there is provided a hybrid catalyst composition comprising transition metal compounds represented by Formula 1 and Formula 2.

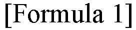

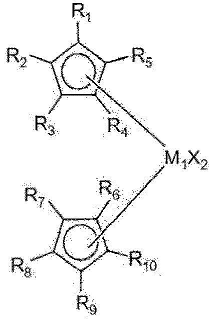

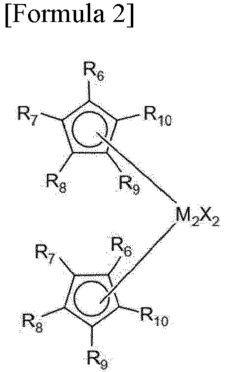

In Formulae 1 and 2, M₁ and M₂ are different from each other and each independently titanium (Ti), zirconium (Zr), or hafnium (Hf).

X is each independently halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido, or C₁₋₂₀ alkylidene, and
R₁ to R₅ and R₆ to R₁₀ are each independently hydrogen, substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, substituted or unsubstituted C₁₋₂₀ alkylidene, or substituted or unsubstituted C₁₋₂₀ silyl, provided that R₁ to R₅ and R₆ to R₁₀ are each independently capable of being linked to adjacent groups to form a substituted or unsubstituted, saturated or unsaturated C₄₋₂₀ ring.

Preferably, the molar ratio of the compound represented by Formula 1 to the compound represented by Formula 2 is in the range of 100:1 to 1:100.

Specifically, the hybrid catalyst composition according to a specific embodiment of the present invention is a first hybrid catalyst composition, in which M₁ and M₂ are different from each other and may each be zirconium or hafnium, X may each be halogen, and R₁ to R₅ and R₆ to R₁₀ may each be hydrogen, substituted or unsubstituted C₁₋₂₀ alkyl, substituted or unsubstituted C₁₋₂₀ alkenyl, or substituted or unsubstituted C₆₋₂₀ aryl. More specifically, X in Formulae 1 and 2 may each be chlorine.

Alternatively, the hybrid catalyst composition according to a specific embodiment of the present invention is a second hybrid catalyst composition, in which M₁ and M₂ are different from each other and may each be zirconium or hafnium, X may each be substituted or unsubstituted C₁₋₂₀ alkyl, and R₁ to R₅ and R₆ to R₁₀ may each be hydrogen, substituted or unsubstituted C₁₋₂₀ alkyl, substituted or unsubstituted C₁₋₂₀ alkenyl, or substituted or unsubstituted C₆₋₂₀ aryl. More specifically, X in Formulae 1 and 2 may each be methyl.

Preferably, the transition metal compound represented by Formula 1 is at least one of the transition metal compounds represented by Formulae 1-1 to 1-12, and the transition metal compound represented by Formula 2 is at least one of the transition metal compounds represented by Formulae 2-1 to 2-12.

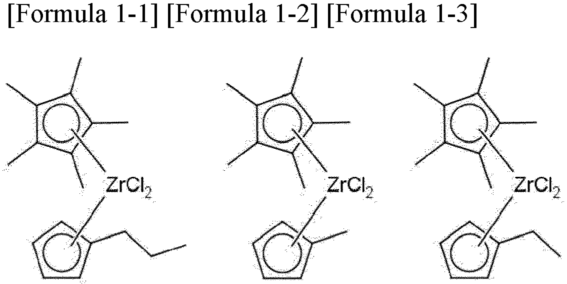

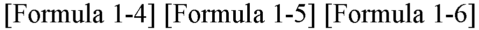

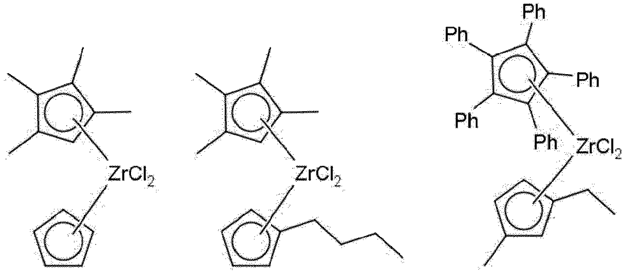

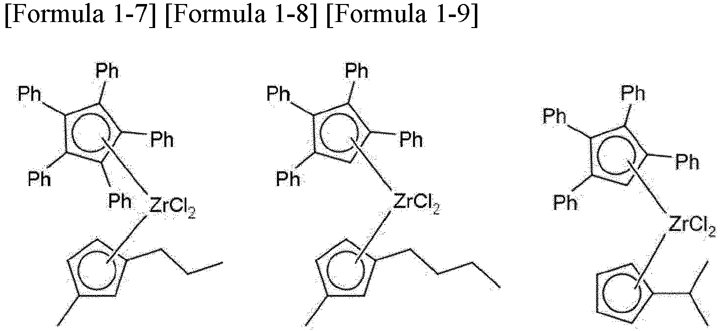

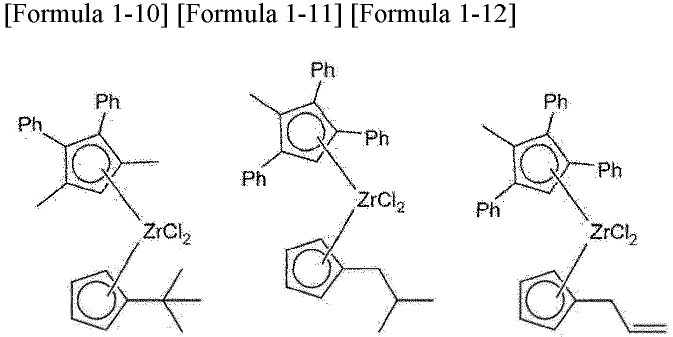

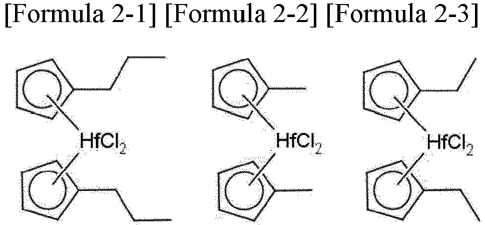

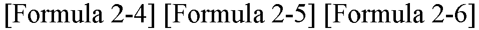

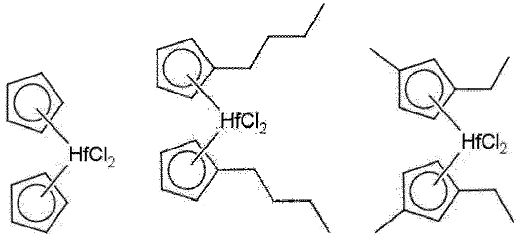

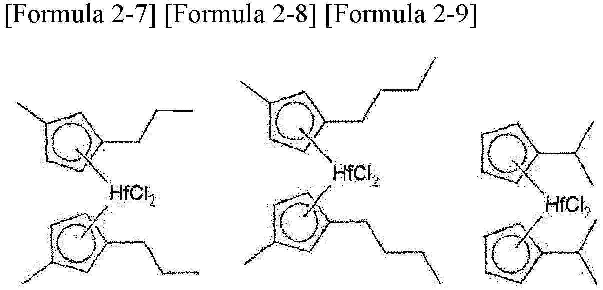

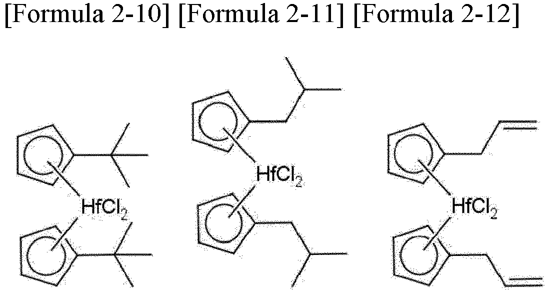

Alternatively, the transition metal compound represented by Formula 1 is at least one of the transition metal compounds represented by Formulae 1-13 to 1-24, and the transition metal compound represented by Formula 2 is at least one of the transition metal compounds represented by Formulae 2-13 to 2-24.

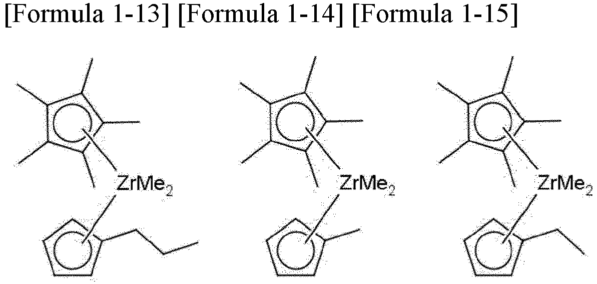

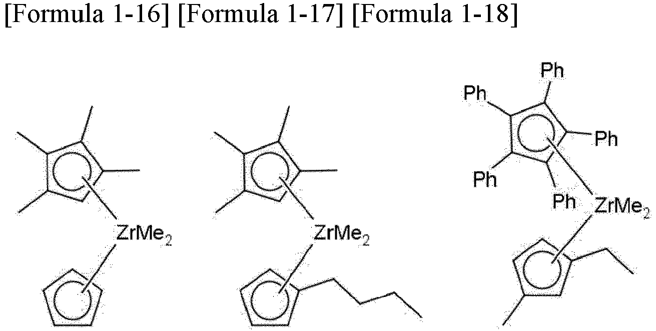

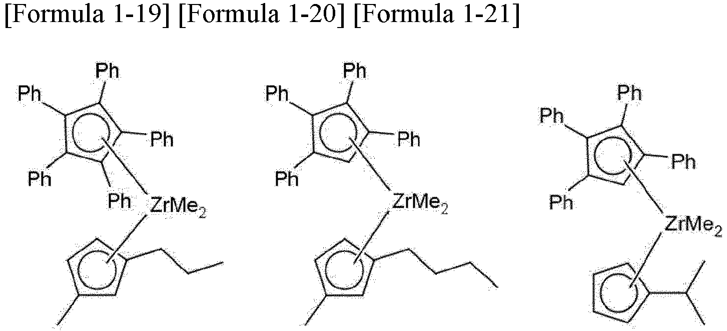

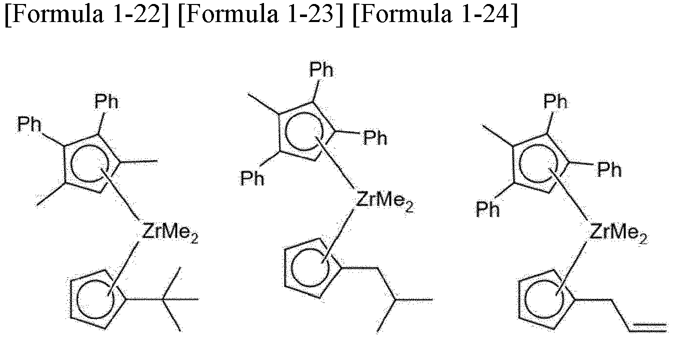

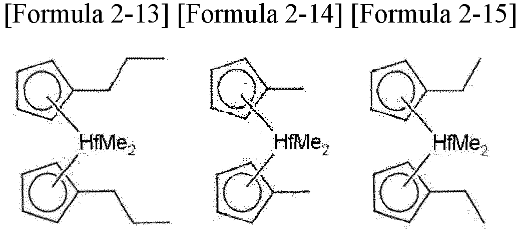

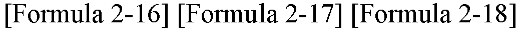

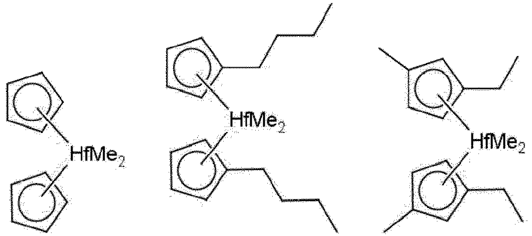

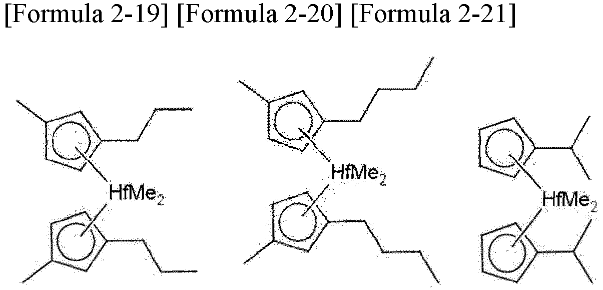

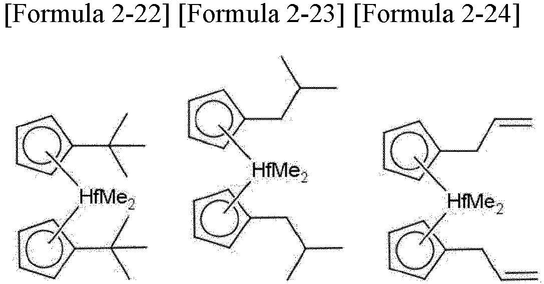

According to an embodiment of the present invention, there is provided a process for preparing a hybrid catalyst composition, which comprises (1) dissolving a compound represented by Formula 3 in a solvent; (2) adding a compound represented by Formula 5 to the solution obtained in step (1) and reacting it under stirring; and (3) adding a compound represented by Formula 4 and a compound represented by Formula 6 to the solution obtained in step (2) and reacting them under stirring to obtain a first hybrid catalyst composition comprising transition metal compounds represented by Formulae 1 and 2, wherein the equivalent ratio of the compound represented by Formula 3 added in step (1) to the compound represented by Formula 5 added in step (2) is in the range of 1:1 to 1.5:1, and the equivalent ratio of the compound represented by Formula 5 added in step (2) to the compound represented by Formula 6 added in step (3) is 1:100 to 100:1.

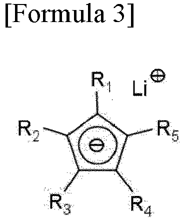

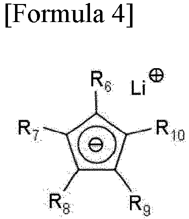

[Formula 5] M₁X₄

[Formula 6] M₂X₄

In Formulae 3 to 6, X is halogen, and M₁, M₂, R₁ to R₅ and R₆ to R₁₀ are as described above in the section of the hybrid catalyst composition comprising different transition metal compounds.

Preferably, in step (1), the compound represented by Formula 3 may be at least one of the compounds represented by Formulae 3-1 to 3-6.

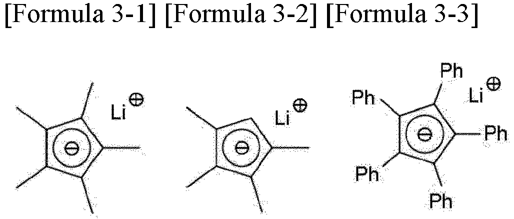

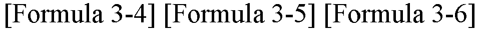

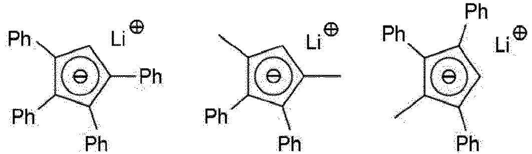

In step (1), the solvent may comprise at least one selected from the group consisting of hexane, pentane, toluene, benzene, dichloromethane, diethyl ether, tetrahydrofuran, acetone, and ethyl acetate.

Preferably, in step (2), the compound represented by Formula 5 is ZrCl₄.

In step (2), the reaction temperature is 0°C to 120°C, and the reaction time is 1 to 72 hours.

Preferably, in step (3), the compound represented by Formula 4 is at least one of the compounds represented by Formulae 4-1 to 4-12.

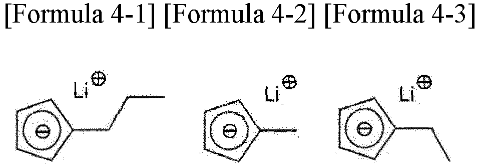

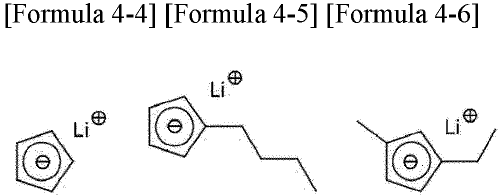

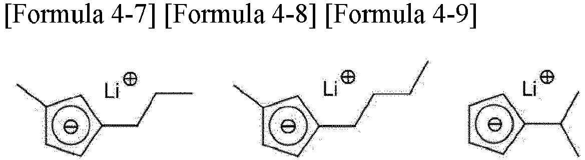

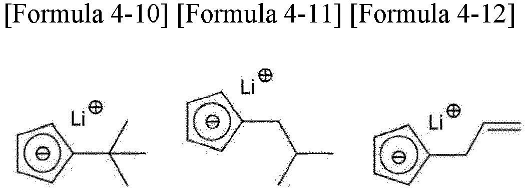

In addition, in step (3), the compound represented by Formula 6 is HfCl₄.

In step (3), the reaction temperature is 0°C to 120°C, and the reaction time is 1 to 72 hours.

The process for preparing a hybrid catalyst composition according to an embodiment of the present invention may further comprise (3a) dissolving the first hybrid catalyst composition in a solvent; and (3b) adding a compound represented by Formula 7a, a compound represented by Formula 7b, or ammonium hydrogen fluoride (NH₄HF₂) to the solution obtained in step (3a) and reacting it under stirring to obtain a second hybrid catalyst composition comprising transition metal compounds represented by Formulae 1 and 2.

[Formula 7a] XₐMgX_{b}

[Formula 7b] X_{c}Li

In Formulae 7a and 7b, Xₐ and X_{c} are each independently C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido, or C₁₋₂₀ alkylidene, and X_{b} is halogen. Preferably, the compound represented by Formula 7a may be MeMgBr, and the compound represented by Formula 7b may be MeLi.

In step (3a), the solvent may comprise at least one selected from the group consisting of hexane, pentane, toluene, benzene, dichloromethane, diethyl ether, tetrahydrofuran, acetone, and ethyl acetate.

Preferably, in step (3b), the reaction temperature is 0°C to 120°C, and the reaction time is 1 to 72 hours.

The process for preparing a hybrid catalyst composition according to an embodiment of the present invention may further comprise (3c) drying the first hybrid catalyst composition or the second hybrid catalyst composition.

In addition, the process for preparing a hybrid catalyst composition according to an embodiment of the present invention may further comprise (3d) dissolving the the first hybrid catalyst composition or the second hybrid catalyst composition dried in step (3c) in a solvent and then removing unreacted substances and/or impurities with a filter.

In step (3d), the solvent may comprise at least one selected from the group consisting of hexane, pentane, toluene, benzene, dichloromethane, diethyl ether, tetrahydrofuran, acetone, and ethyl acetate.

According to an embodiment of the present invention to accomplish another object of the present invention, there is provided a catalyst for olefin polymerization, which comprises the first transition metal compound or the second transition metal compound; and a cocatalyst compound.

Here, the cocatalyst compound may be at least one selected from the group consisting of a compound represented by Formula 8, a compound represented by Formula 9, and a compound represented by Formula 10.

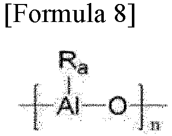

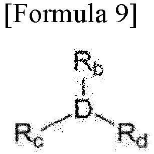

[Formula 10] [L-H]⁺[Z(A)₄]⁻ or [L]⁺[Z(A)₄]⁻

In Formula 8, n is an integer of 2 or more, and Rₐ may each independently be a halogen atom, C₁₋₂₀ hydrocarbon, or C₁₋₂₀ hydrocarbon substituted with halogen.

In Formula 9, D is aluminum (Al) or boron (B), and R_{b}, R_{c}, and R_{d} are each independently a halogen atom, C₁₋₂₀ hydrocarbon, C₁₋₂₀ hydrocarbon substituted with halogen, or C₁₋₂₀ alkoxy.

In Formula 10, L is a neutral or cationic Lewis acid, [L-H]⁺ and [L]⁺ a Brönsted acid, Z is a group 13 element, and A is each independently substituted or unsubstituted C₆₋₂₀ aryl or substituted or unsubstituted C₁₋₂₀ alkyl.

Specifically, the compound represented by Formula 8 is at least one selected from the group consisting of methylaluminoxane, ethylaluminoxane, isobutylaluminoxane, and butylaluminoxane.

In addition, the compound represented by Formula 9 is at least one selected from the group consisting of trimethylaluminum, triethylaluminum, triisobutylaluminum, tripropylaluminum, tributylaluminum, dimethylchloroaluminum, triisopropylaluminum, tri-*s*-butylaluminum, tricyclopentylaluminum, tripentylaluminum, triisopentyaluminum, trihexyaluminum, trioctyaluminum, ethyldimethylaluminum, methyldiethylaluminum, triphenylaluminum, tri-*p*-tolylaluminum, dimethylaluminummethoxide, dimethylaluminumethoxide, trimethylboron, triethylboron, triisobutylboron, tripropylboron, and tributylboron.

In addition, the compound represented by Formula 10 is at least one selected from the group consisting of triethylammonium tetraphenylborate, tributylammonium tetraphenylborate, trimethylammonium tetraphenylborate, tripropylammonium tetraphenylborate, trimethylammonium tetra(*p*-tolyl)borate, trimethylammonium tetra(*o,p-*dimethylphenyl)borate, tributylammonium tetra(*p*-trifluoromethylphenyl)borate, trimethylammonium tetra(*p*-trifluoromethylphenyl)borate, tributylammonium tetrapentafluorophenylborate, N,N-diethylanilinium tetraphenylborate, N,N-diethylanilinium tetrapentafluorophenylborate, diethylammonium tetrapentafluorophenylborate, triphenylphosphonium tetraphenylborate, trimethylphosphonium tetraphenylborate, triethylammonium tetraphenylaluminate, tributylammonium tetraphenylaluminate, trimethylammonium tetraphenylaluminate, tripropylammonium tetraphenylaluminate, trimethylammonium tetra(*p*-tolyl)aluminate, tripropylammonium tetra(*p*-tolyl)aluminate, triethylammonium tetra(*o,p-*dimethylphenyl)aluminate, tributylammonium tetra(*p*-trifluoromethylphenyl)aluminate, trimethylammonium tetra(*p*-trifluoromethylphenyl)aluminate, tributylammonium tetrapentafluorophenylaluminate, N,N-diethylanilinium tetraphenylaluminate, N,N-diethylanilinium tetrapentafluorophenylaluminate, diethylammonium tetrapentatetraphenylaluminate, triphenylphosphonium tetraphenylaluminate, trimethylphosphonium tetraphenylaluminate, tripropylammonium tetra(*p*-tolyl)borate, triethylammonium tetra(*o,p*-dimethylphenyl)borate, tributylammonium tetra(*p-*trifluoromethylphenyl) borate, triphenylcarbonium tetra(*p*-trifluoromethylphenyl)borate, and triphenylcarbonium tetrapentafluorophenylborate.

Preferably, the catalyst for olefin polymerization further comprises a carrier for supporting the hybrid catalyst composition. Specifically, the carrier may support both of the hybrid catalyst composition and the cocatalyst.

Specifically, the carrier may comprise at least one selected from the group consisting of silica, alumina, and magnesia.

Here, the total amount of the hybrid transition metal compounds supported on the carrier is 0.001 to 1 mmole based on 1 g of the carrier, and the amount of the cocatalyst compound supported on the carrier is 2 to 15 mmoles based on the 1 g of the carrier.

According to another embodiment of the present invention, there is provided a process for preparing a catalyst for olefin polymerization, which comprises (1) dissolving a compound represented by Formula 3 in a solvent; (2) adding a compound represented by Formula 5 to the solution obtained in step (1) and reacting it under stirring; (3) adding a compound represented by Formula 4 and a compound represented by Formula 6 to the solution obtained in step (2) and reacting them under stirring to obtain a first hybrid catalyst composition comprising transition metal compounds represented by Formulae 1 and 2; and (4) supporting the hybrid catalyst composition, a cocatalyst compound, or both on a carrier, wherein the equivalent ratio of the compound represented by Formula 3 added in step (1) to the compound represented by Formula 5 added in step (2) is in the range of 1:1 to 1.5:1, and the equivalent ratio of the compound represented by Formula 5 added in step (2) to the compound represented by Formula 6 added in step (3) is 1: 100 to 100:1.

The process for preparing a catalyst for olefin polymerization according to an embodiment of the present invention may further comprise (3a) dissolving the first hybrid catalyst composition in a solvent; and (3b) adding a compound represented by Formula 7a, a compound represented by Formula 7b, or ammonium hydrogen fluoride (NH₄HF₂) to the solution obtained in step (3a) and reacting it under stirring to obtain a second hybrid catalyst composition comprising transition metal compounds represented by Formulae 1 and 2.

### Advantageous Effects of the Invention

In the hybrid catalyst composition comprising different transition metal compounds and the catalyst for olefin polymerization comprising the same according to the embodiments of the present invention, it is possible to prepare polyolefins having excellent processability and mechanical properties depending on the content of the corresponding transition metal compounds.

In addition, in the processes for preparing a hybrid catalyst composition comprising different transition metal compounds and for preparing a catalyst for olefin polymerization comprising the same, it is possible to easily provide a catalyst for the polymerization of polyolefins having excellent processability and mechanical properties by precisely controlling the ratio of the hybrid transition metal compounds.

### Best Mode for Carrying Out the Invention

Hereinafter, the present invention will be described in more detail.

### Hybrid catalyst composition comprising different transition metal compounds

According to an embodiment of the present invention, there is provided a hybrid catalyst composition comprising transition metal compounds represented by Formulae 1 and 2.

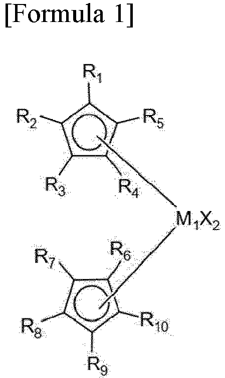

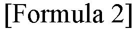

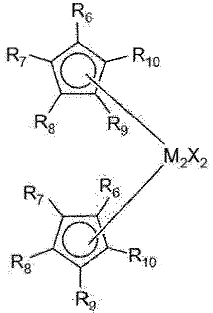

In Formulae 1 and 2, M₁ and M₂ are different from each other and each titanium (Ti), zirconium (Zr), or hafnium (Hf). Specifically, M₁ and M₂ are different from each other and may each be hafnium (Hf) or zirconium (Zr).

X is each independently halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido, or C₁₋₂₀ alkylidene. Specifically, X may each be halogen or substituted or unsubstituted C₁₋₂₀ alkyl.

R₁ to R₅ and R₆ to R₁₂ are each independently hydrogen, substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, substituted or unsubstituted C₁₋₂₀ alkylidene, or substituted or unsubstituted C₁₋₂₀ silyl. Here, R₁ to R₅ and R₆ to R₁₀ are each independently capable of being linked to adjacent groups to form a substituted or unsubstituted saturated or unsaturated C₄₋₂₀ ring. Specifically, R₁ to R₅ and R₆ to R₁₀ may each be hydrogen, substituted or unsubstituted C₁₋₂₀ alkyl, substituted or unsubstituted C₁₋₂₀ alkenyl, or substituted or unsubstituted C₆₋₂₀ aryl.

In a preferred embodiment of the present invention, the molar ratio of the compound represented by Formula 1 to the compound represented by Formula 2 may be in the range of 100: 1 to 1:100. Preferably, the molar ratio of these two compounds is 50:1 to 1:50. More preferably, the molar ratio of these two compounds is 10: 1 to 1:10.

In a preferred specific embodiment of the present invention, in Formulae 1 and 2, M₁ and M₂ are different from each other and may each be zirconium or hafnium, X may each be halogen or substituted or unsubstituted C₁₋₂₀ alkyl, R₁ to R₅ and R₆ to R₁₀ may each be hydrogen, substituted or unsubstituted C₁₋₂₀ alkyl, substituted or unsubstituted C₁₋₂₀ alkenyl, or substituted or unsubstituted C₆₋₂₀ aryl.

Specifically, the hybrid catalyst composition according to an embodiment of the present invention may be a first hybrid catalyst composition. In such an event, in Formulae 1 and 2, M₁ and M₂ are different from each other and may each be zirconium or hafnium, X may each be halogen, more specifically chlorine, R₁ to R₅ and R₆ to R₁₀ may each be hydrogen, substituted or unsubstituted C₁₋₂₀ alkyl, substituted or unsubstituted C₁₋₂₀ alkenyl, or substituted or unsubstituted C₆₋₂₀ aryl.

Alternatively, the hybrid catalyst composition according to an embodiment of the present invention may be a second hybrid catalyst composition. In such an event, in Formulae 1 and 2, M₁ and M₂ are different from each other and may each be zirconium or hafnium, X may each be substituted or unsubstituted C₁₋₂₀ alkyl, more specifically methyl, R₁ to R₅ and R₆ to R₁₀ may each be hydrogen, substituted or unsubstituted C₁₋₂₀ alkyl, substituted or unsubstituted C₁₋₂₀ alkenyl, or substituted or unsubstituted C₆₋₂₀ aryl.

In a preferred embodiment of the present invention, the transition metal compound represented by Formula 1 may be at least one of the transition metal compounds represented by Formulae 1-1 to 1-12, and the transition metal compound represented by Formula 2 may be at least one of the transition metal compounds represented by Formulae 2-1 to 2-12.

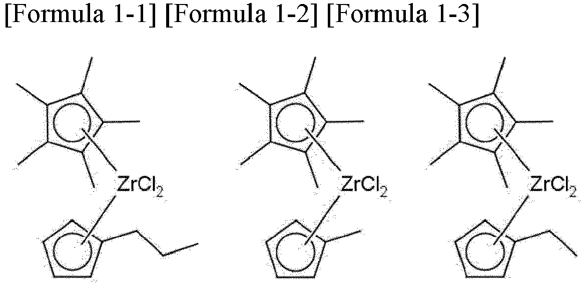

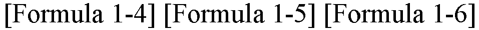

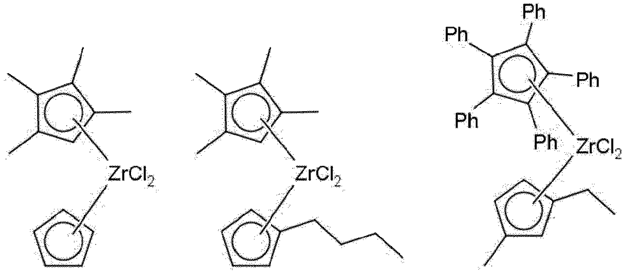

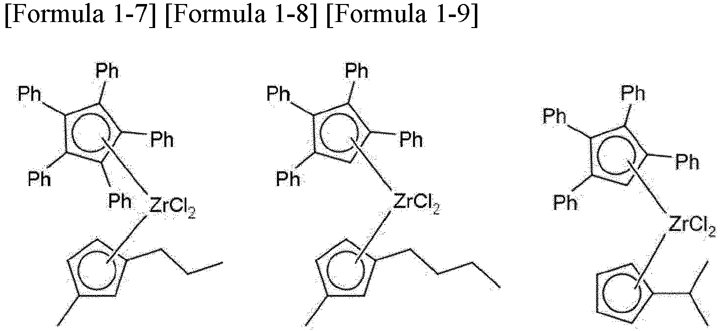

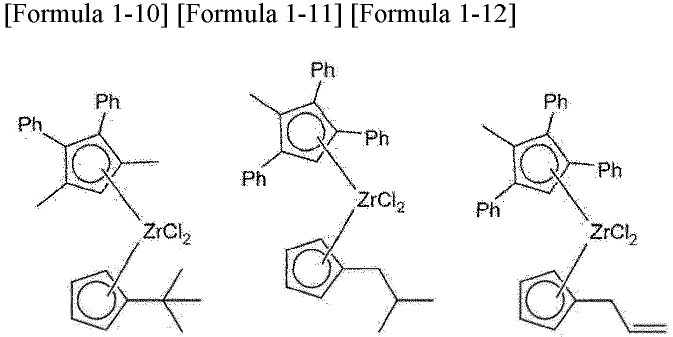

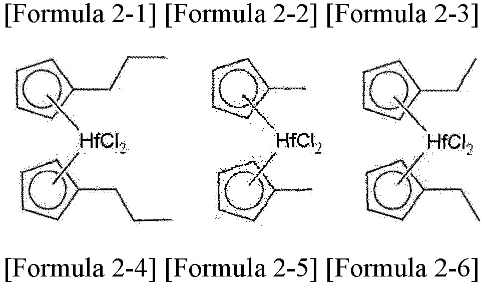

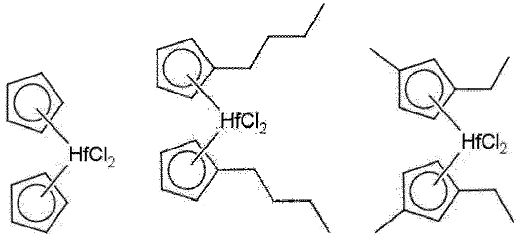

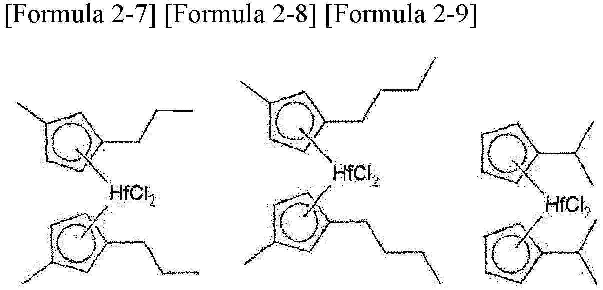

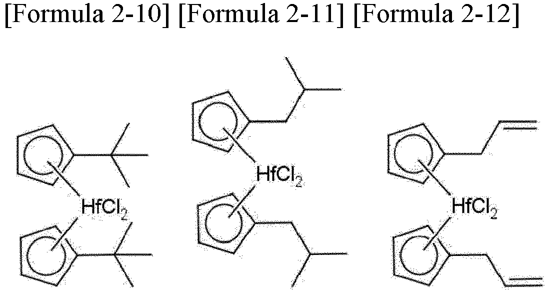

Alternatively, in a preferred embodiment of the present invention, the transition metal compound represented by Formula 1 may be at least one of the transition metal compounds represented by Formulae 1-13 to 1-24, and the transition metal compound represented by Formula 2 may be at least one of the transition metal compounds represented by Formulae 2-13 to 2-24.

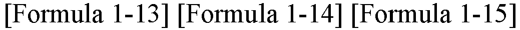

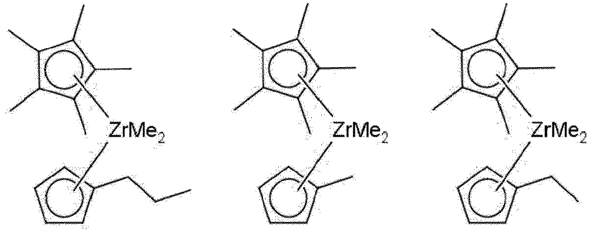

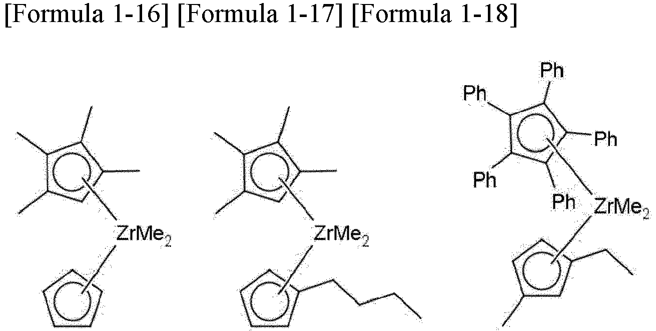

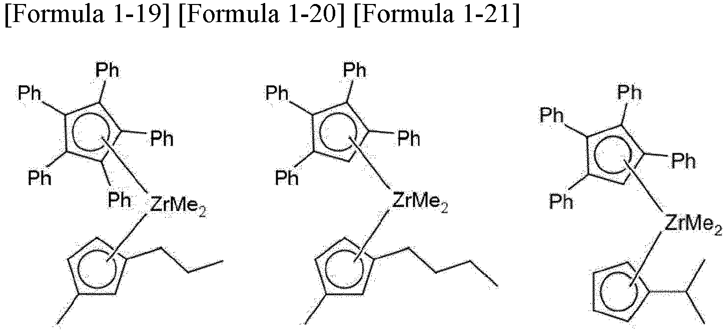

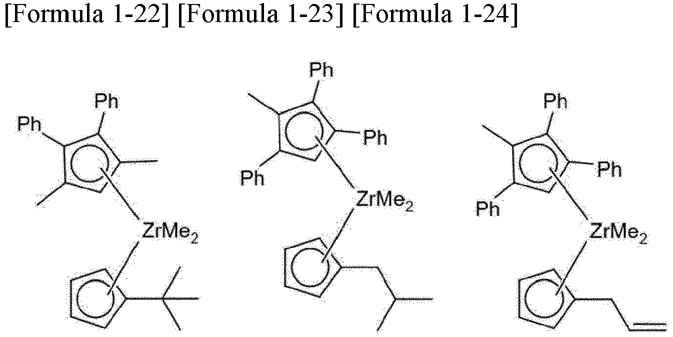

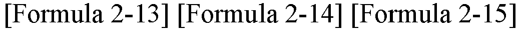

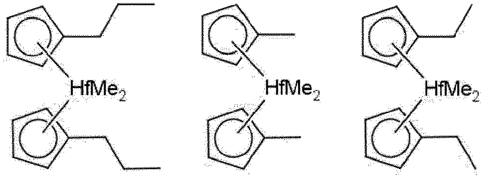

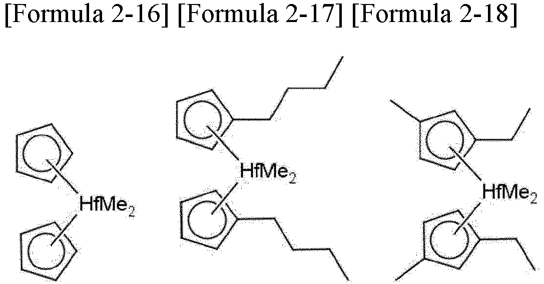

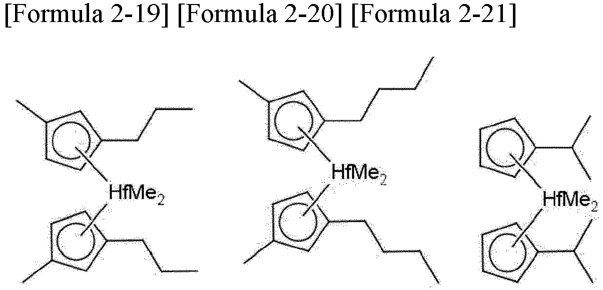

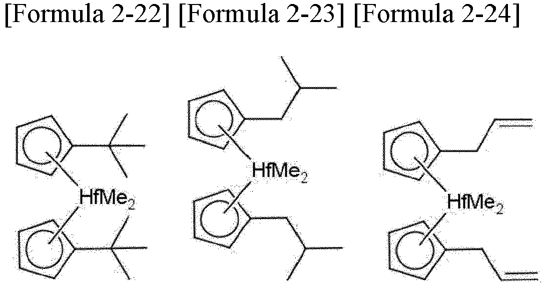

### Process for preparing a hybrid catalyst composition

There is provided a process for preparing a hybrid catalyst composition, which comprises (1) dissolving a compound represented by Formula 3 in a solvent; (2) adding a compound represented by Formula 5 to the solution obtained in step (1) and reacting it under stirring; and (3) adding a compound represented by Formula 4 and a compound represented by Formula 6 to the solution obtained in step (2) and reacting them under stirring to obtain a first hybrid catalyst composition comprising transition metal compounds represented by Formulae 1 and 2, wherein the equivalent ratio of the compound represented by Formula 3 added in step (1) to the compound represented by Formula 5 added in step (2) is in the range of 1:1 to 1.5:1, and the equivalent ratio of the compound represented by Formula 5 added in step (2) to the compound represented by Formula 6 added in step (3) is 1: 100 to 100:1.

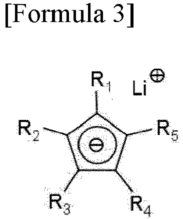

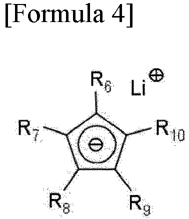

[Formula 5] M₁X₄

[Formula 6] M₂X₄

In Formulae 3 to 6, X is halogen, and M₁, M₂, R₁ to R₅ and R₆ to R₁₀ are as described above in the section of the hybrid catalyst composition comprising different transition metal compounds.

### Step (1)

Specifically, in step (1), the compound represented by Formula 3 is dissolved in a solvent.

Preferably, the compound represented by Formula 3 may be at least one of the compounds represented by Formulae 3-1 to 3-6.

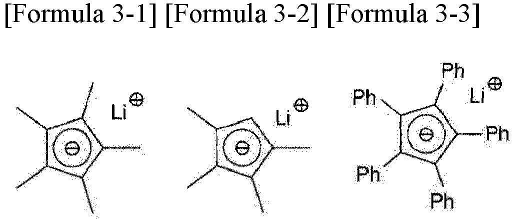

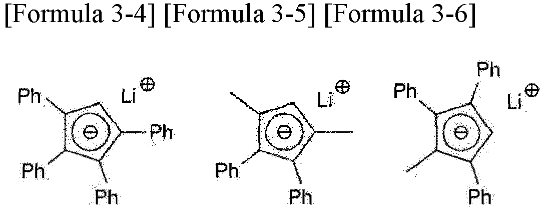

Here, the solvent may comprise at least one selected from the group consisting of aliphatic hydrocarbon solvents such as hexane and pentane, aromatic hydrocarbon solvents such as toluene and benzene, hydrocarbon solvents substituted with chlorine atoms such as dichloromethane, ether-based solvents such as diethyl ether and tetrahydrofuran, acetone, and ethyl acetate. Preferably, the solvent may be toluene, but it is not particularly limited thereto.

When the compound represented by Formula 3 is dissolved in a solvent, the temperature and dissolution time are not particularly limited. For example, the compound represented by Formula 3 is added to a solvent at a temperature of -78°C to 80°C, preferably a temperature of -40°C to 60°C, more preferably room temperature, and stirred to be dissolved for 10 minutes to 17 hours, preferably 20 minutes to 10 hours, more preferably about 1 hour.

### Step (2)

In step (2), a compound represented by Formula 5 is added to the solution obtained in step (1), which is reacted under stirring.

Preferably, the compound represented by Formula 5 may be any one of ZrCl₄ and HfCl₄. More preferably, the compound represented by Formula 5 may be ZrCl₄.

The temperature at which the compound represented by Formula 5 is added is preferably in the range of -78°C to 30°C. More preferably, the temperature at which the compound represented by Formula 5 is added may be in the range of -40°C to 10°C. Most preferably, the temperature at which the compound represented by Formula 5 is added may be about -30°C.

Once the compound represented by Formula 5 has been added, the temperature is gradually raised to a range of 0°C to 120°C, more preferably 25°C to 80°C, and most preferably about 65°C, and it is stirred for 1 to 72 hours, preferably 5 to 48 hours, and more preferably 12 to 24 hours to carry out the reaction.

In the preparation process according to a preferred embodiment of the present invention, the equivalent ratio of the compound represented by Formula 3 added in step (1) to the compound represented by Formula 5 added in step (2) is 1: 1 to 1.5:1. The equivalent ratio of these two compounds is preferably 1.1:1 to 1.5:1, more preferably 1.2:1 to 1.5:1. In such a case, a transition metal compound of Formula 2 having a central metal different from that of the transition metal compound of Formula 1 may be obtained.

### Step (3)

In step (3), the compound represented by Formula 4 and the compound represented by Formula 6 are added to the solution obtained in step (2), which are reacted under stirring.

Preferably, the compound represented by Formula 4 may be at least one of the compounds represented by Formulae 4-1 to 4-12.

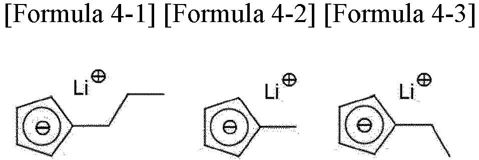

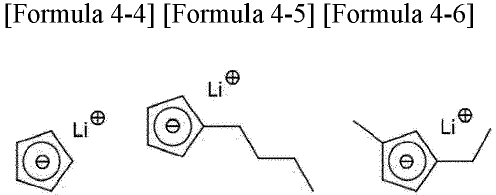

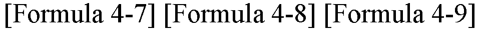

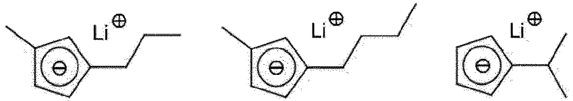

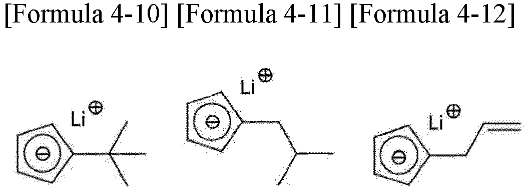

In addition, the compound represented by Formula 6 may be the other one of ZrCl₄ and HfCl₄. Preferably, the compound represented by Formula 6 may be HfCl₄.

The temperature at which the compound represented by Formula 4 and the compound represented by Formula 6 are added is preferably in the range of -78°C to 30°C. More preferably, the temperature at which the compound represented by Formula 4 and the compound represented by Formula 6 are added may be in the range of -40°C to 10°C. Most preferably, the temperature at which the compound represented by Formula 4 and the compound represented by Formula 6 are added may be about -30°C.

Once the compound represented by Formula 4 and the compound represented by Formula 6 have been added, the temperature is gradually raised to a range of 0°C to 120°C, more preferably 0°C to 60°C, and most preferably room temperature, and it is stirred for 1 to 72 hours, preferably 3 to 48 hours, and more preferably about 7 to 22 hours to carry out the reaction.

In step (3), a first hybrid catalyst composition in which X is halogen in Formulae 1 and 2 is obtained. Specifically, a first hybrid catalyst composition in which X is chlorine in Formulae 1 and 2 is obtained.

In the preparation process according to a preferred embodiment of the present invention, the molar ratio of the compound represented by Formula 5 to the compound represented by Formula 6 may be in the range of 100:1 to 1:100. Preferably, the molar ratio of these two compounds is 50:1 to 1:50. More preferably, the molar ratio of these two compounds is 10: 1 to 1:10.

The process for preparing a hybrid catalyst composition according to an embodiment of the present invention may further comprise (3a) dissolving the first hybrid catalyst composition in a solvent; and (3b) adding a compound represented by Formula 7a, a compound represented by Formula 7b, or ammonium hydrogen fluoride (NH₄HF₂) to the solution obtained in step (3a) and reacting it under stirring to obtain a second hybrid catalyst composition comprising transition metal compounds represented by Formulae 1 and 2. Here, the compound represented by Formula 7a may be a Grignard compound.

[Formula 7a] XₐMgX_{b}

[Formula 7b] X_{c}Li

In Formulae 7a and 7b, Xₐ and X_{c} may each independently be C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido, or C₁₋₂₀ alkylidene, and X_{b} may be halogen. Preferably, the compound represented by Formula 7a may be MeMgBr, and the compound represented by Formula 7b may be MeLi.

In step (3a), the first hybrid catalyst composition is dissolved in a solvent.

Here, the solvent may be substantially the same as the solvent used in step (1) above. Preferably, the solvent may be toluene, but it is not particularly limited thereto.

In step (3b), a compound represented by Formula 7 is added to the solution obtained in step (3a), which is reacted under stirring.

The temperature at which the compound represented by Formula 7 is added is preferably in the range of -78°C to 30°C. More preferably, the temperature at which the compound represented by Formula 7 is added may be in the range of -40°C to 10°C. Most preferably, the temperature at which the compound represented by Formula 7 is added may be about -30°C.

Once the compound represented by Formula 7 has been added, the temperature is gradually raised to a range of 0°C to 120°C, more preferably 0°C to 60°C, and most preferably room temperature, and it is stirred for 1 to 72 hours, preferably 1 to 24 hours, and more preferably about 3 to5 hours to carry out the reaction.

In step (3b), a second hybrid catalyst composition in which X is C₁₋₂₀ alkyl in Formulae 1 and 2 is obtained. Specifically, a second hybrid catalyst composition in which X is methyl in Formulae 1 and 2 is obtained.

The process for preparing a hybrid catalyst composition according to an embodiment of the present invention may further comprise (3c) drying the first hybrid catalyst composition obtained in step (3) or the second hybrid catalyst composition obtained in step (3b). Here, the drying conditions of the composition are not particularly limited, but it may be carried out in a temperature range of 25°C to 80°C, more preferably in a temperature range of 25°C to 50°C, and most preferably at a temperature of about 25°C.

In addition, the process for preparing a hybrid catalyst composition according to an embodiment of the present invention may further comprise (3d) dissolving the the first hybrid catalyst composition or the second hybrid catalyst composition dried in step (3c) in a solvent and then removing unreacted substances and/or impurities with a filter. Here, the solvent may be substantially the same as the solvent used in step (1) above. Preferably, dichloromethane may be used, but it is not particularly limited thereto. The filter for removing unreacted substances and/or impurities is not particularly limited, but a Celite filter may preferably be used.

### Catalyst for olefin polymerization

According to another embodiment of the present invention, there is provided a catalyst for olefin polymerization, which comprises a hybrid catalyst composition comprising transition metal compounds represented by Formulae 1 and 2; and a cocatalyst compound.

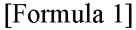

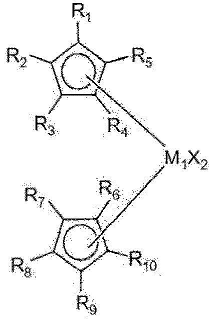

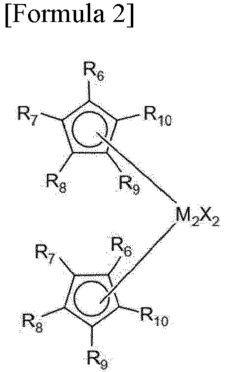

In Formulae 1 and 2, M₁, M₂, X, R₁ to R₅ and R₆ to R₁₀ are as described above in the section of the hybrid catalyst composition comprising different transition metal compounds.

In a preferred embodiment of the present invention, the molar ratio of the compound represented by Formula 1 to the compound represented by Formula 2 may be in the range of 100: 1 to 1:100. Preferably, the molar ratio of these two compounds is 50:1 to 1:50. More preferably, the molar ratio of these two compounds is 10: 1 to 1:10.

In a preferred specific embodiment of the present invention, in Formulae 1 and 2, M₁ and M₂ are different from each other and may each be zirconium or hafnium, X may each be halogen or substituted or unsubstituted C₁₋₂₀ alkyl, R₁ to R₅ and R₆ to R₁₀ may each be hydrogen, substituted or unsubstituted C₁₋₂₀ alkyl, substituted or unsubstituted C₁₋₂₀ alkenyl, or substituted or unsubstituted C₆₋₂₀ aryl.

Specifically, the catalyst for olefin polymerization according to an embodiment of the present invention may comprise a first hybrid catalyst composition. In such an event, in Formulae 1 and 2, M₁ and M₂ are different from each other and may each be zirconium or hafnium, X may each be halogen, more specifically chlorine, R₁ to R₅ and R₆ to R₁₀ may each be hydrogen, substituted or unsubstituted C₁₋₂₀ alkyl, substituted or unsubstituted C₁₋₂₀ alkenyl, or substituted or unsubstituted C₆₋₂₀ aryl.

Alternatively, the catalyst for olefin polymerization according to an embodiment of the present invention may comprise a second hybrid catalyst composition. In such an event, in Formulae 1 and 2, M₁ and M₂ are different from each other and may each be zirconium or hafnium, X may each be substituted or unsubstituted C₁₋₂₀ alkyl, more specifically methyl, R₁ to R₅ and R₆ to R₁₀ may each be hydrogen, substituted or unsubstituted C₁₋₂₀ alkyl, substituted or unsubstituted C₁₋₂₀ alkenyl, or substituted or unsubstituted C₆₋₂₀ aryl.

In a preferred embodiment of the present invention, the transition metal compound represented by Formula 1 may be at least one of the transition metal compounds represented by Formulae 1-1 to 1-12, and the transition metal compound represented by Formula 2 may be at least one of the transition metal compounds represented by Formulae 2-1 to 2-12.

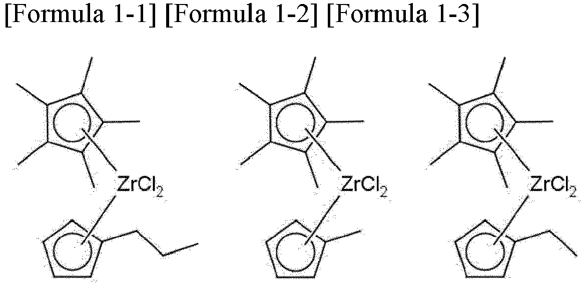

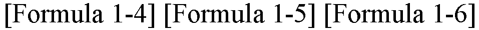

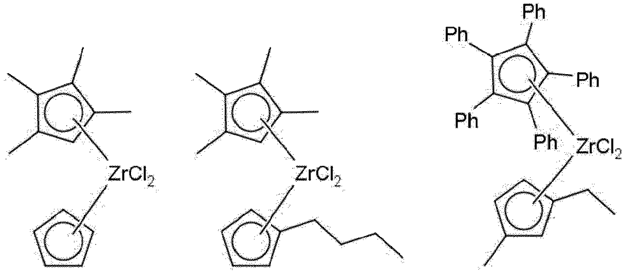

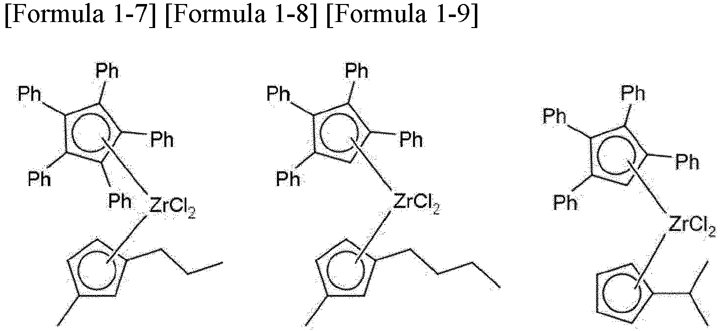

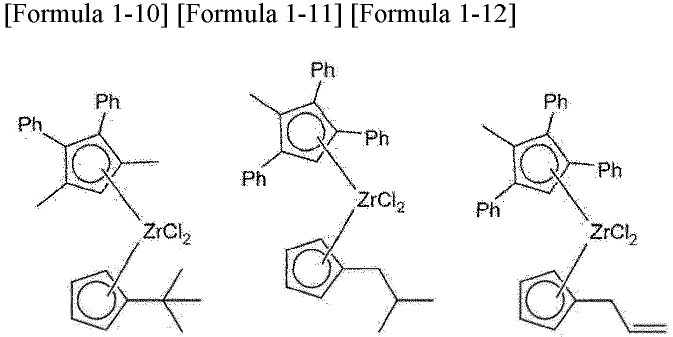

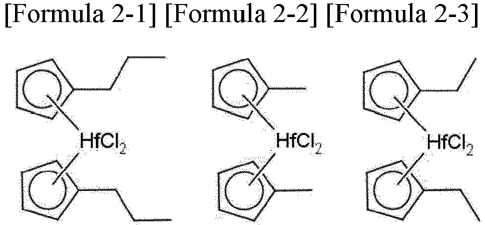

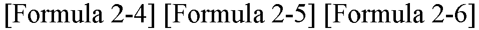

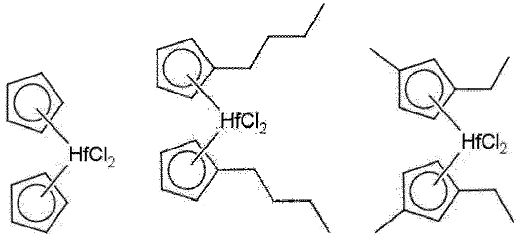

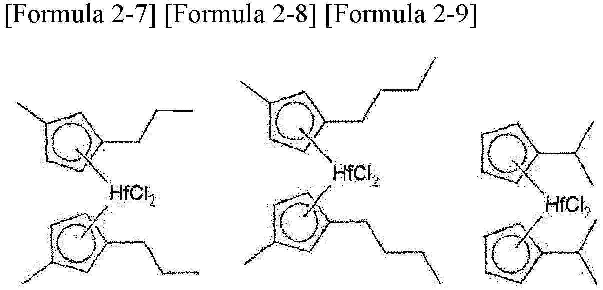

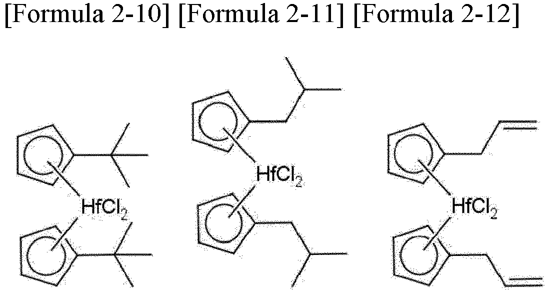

Alternatively, in a preferred embodiment of the present invention, the transition metal compound represented by Formula 1 may be at least one of the transition metal compounds represented by Formulae 1-13 to 1-24, and the transition metal compound represented by Formula 2 may be at least one of the transition metal compounds represented by Formulae 2-13 to 2-24.

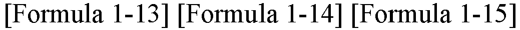

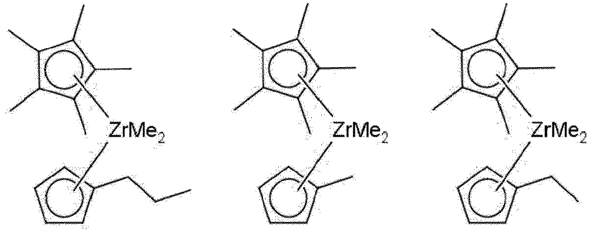

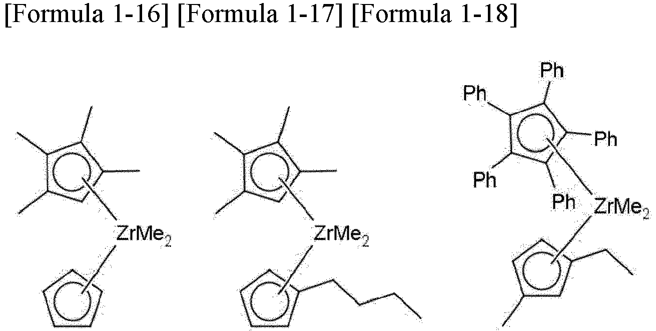

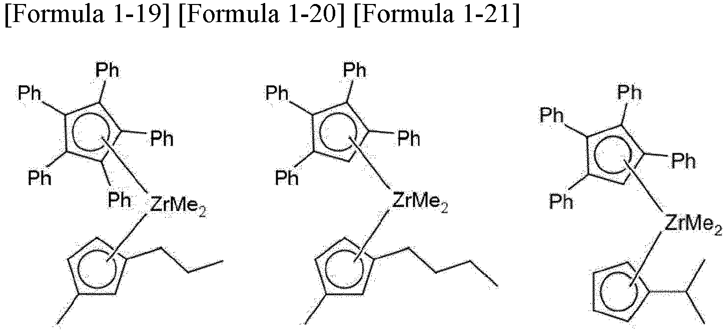

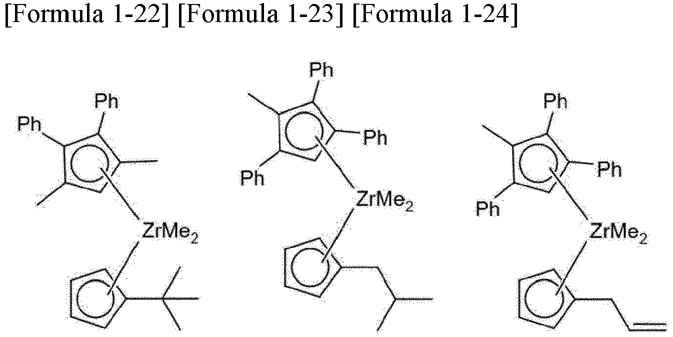

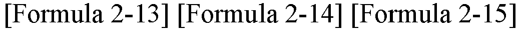

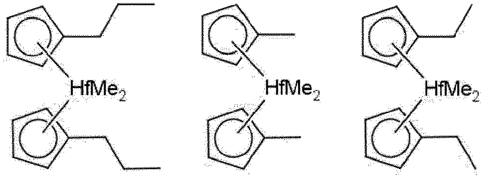

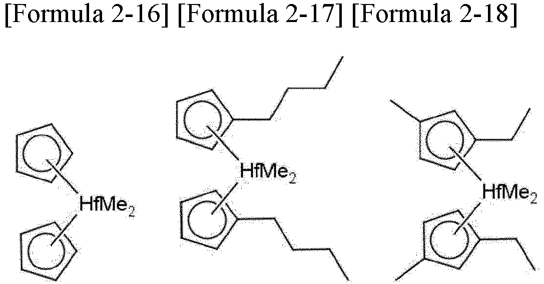

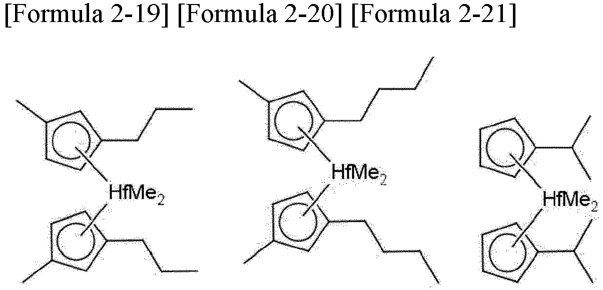

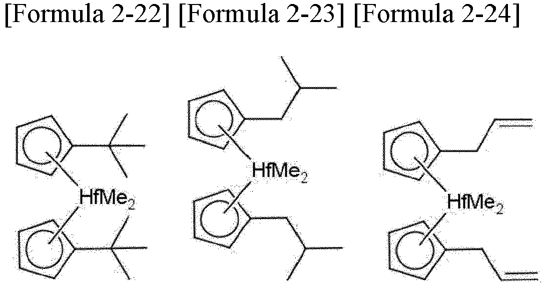

Meanwhile, the cocatalyst compound may comprise at least one of a compound represented by Formula 8, a compound represented by Formula 9, and a compound represented by Formula 10.

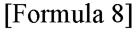

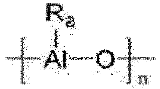

In Formula 8, n is an integer of 2 or more, and Rₐ may each independently be halogen, C₁₋₂₀ hydrocarbon, or C₁₋₂₀ hydrocarbon substituted with halogen. Specifically, Rₐ may be methyl, ethyl, n-butyl, or isobutyl.

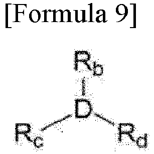

In Formula 9, D is aluminum (Al) or boron (B), and R_{b}, R_{c}, and R_{d} are each independently a halogen atom, C₁₋₂₀ hydrocarbon, C₁₋₂₀ hydrocarbon substituted with halogen, or C₁₋₂₀ alkoxy. Specifically, when D is aluminum (Al), R_{b}, R_{c}, and R_{d} may each independently be methyl or isobutyl, and when D is boron (B), R_{b}, R_{c}, and R_{d} may each be pentafluorophenyl.

[Formula 10] [L-H]⁺[Z(A)₄]⁻ or [L]⁺[Z(A)₄]⁻

In Formula 10, L is a neutral or cationic Lewis acid, [L-H]⁺ and [L]⁺ a Brönsted acid, Z is a group 13 element, and A is each independently substituted or unsubstituted C₆₋₂₀ aryl or substituted or unsubstituted C₁₋₂₀ alkyl. Specifically, [LH]⁺ may be a dimethylanilinium cation, [Z(A)₄]⁻ may be [B(C₆F₅)₄]⁻, and [L]⁺ may be [(C₆H₅)₃C]⁺.

Specifically, examples of the compound represented by Formula 8 include methylaluminoxane, ethylaluminoxane, isobutylaluminoxane, butylaluminoxane, and the like. Preferred is methylaluminoxane. But it is not limited thereto.

Examples of the compound represented by Formula 9 include trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentyaluminum, trihexyaluminum, trioctyaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, and tributylboron. Preferred are trimethylaluminum, triethylaluminum, and triisobutylaluminum. But it is not limited thereto.

Examples of the compound represented by Formula 10 include triethylammonium tetraphenylborate, tributylammonium tetraphenylborate, trimethylammonium tetraphenylborate, tripropylammonium tetraphenylborate, trimethylammonium tetra(*p-*tolyl)borate, trimethylammonium tetra(*o,p*-dimethylphenyl)borate, tributylammonium tetra(*p*-trifluoromethylphenyl)borate, trimethylammonium tetra(*p-*trifluoromethylphenyl)borate, tributylammonium tetrapentafluorophenylborate, N,N-diethylanilinium tetraphenylborate, N,N-diethylanilinium tetrapentafluorophenylborate, diethylammonium tetrapentafluorophenylborate, triphenylphosphonium tetraphenylborate, trimethylphosphonium tetraphenylborate, triethylammonium tetraphenylaluminate, tributylammonium tetraphenylaluminate, trimethylammonium tetraphenylaluminate, tripropylammonium tetraphenylaluminate, trimethylammonium tetra(*p*-tolyl)aluminate, tripropylammonium tetra(*p*-tolyl)aluminate, triethylammonium tetra(*o,p-*dimethylphenyl)aluminate, tributylammonium tetra(*p*-trifluoromethylphenyl)aluminate, trimethylammonium tetra(*p*-trifluoromethylphenyl)aluminate, tributylammonium tetrapentafluorophenylaluminate, N,N-diethylanilinium tetraphenylaluminate, N,N-diethylanilinium tetrapentafluorophenylaluminate, diethylammonium tetrapentatetraphenylaluminate, triphenylphosphonium tetraphenylaluminate, trimethylphosphonium tetraphenylaluminate, tripropylammonium tetra(*p*-tolyl)borate, triethylammonium tetra(*o,p*-dimethylphenyl)borate, tributylammonium tetra(*p-*trifluoromethylphenyl) borate, triphenylcarbonium tetra(*p*-trifluoromethylphenyl)borate, and triphenylcarbonium tetrapentafluorophenylborate.

In a preferred embodiment of the present invention, the catalyst for olefin polymerization may further comprise a carrier for supporting the hybrid catalyst composition. Specifically, the carrier may support both of the hybrid catalyst composition and the cocatalyst.

In such an event, the carrier may comprise a material containing a hydroxyl group on its surface. Preferably, a material that has been dried to remove moisture from its surface and has a highly reactive hydroxyl group and a siloxane group may be used. For example, the carrier may comprise at least one selected from the group consisting of silica, alumina, and magnesia. Specifically, silica, silica-alumina, and silica-magnesia dried at high temperatures may be used as a carrier. They usually contain oxides, carbonates, sulfates, and nitrates components such as Na₂O, K₂CO₃, BaSO₄, and Mg(NO₃)₂. In addition, they may comprise carbon, zeolite, magnesium chloride, and the like. However, the carrier is not limited thereto. It is not particularly limited as long as it can support the transition metal compound and the cocatalyst compound.

The carrier may have an average particle size of 10 to 250 µm, preferably an average particle size of 10 to 150 µm, and more preferably 20 to 100 µm.

The carrier may have a micropore volume of 0.1 to 10 cc/g, preferably 0.5 to 5 cc/g, and more preferably 1.0 to 3.0 cc/g.

The carrier may have a specific surface area of 1 to 1,000 m²/g, preferably 100 to 800 m²/g, more preferably 200 to 600 m²/g.

In a preferred example, when the carrier is silica, the drying temperature of the silica may be from room temperature to 900°C. The drying temperature may preferably be from room temperature to 800°C, more preferably from room temperature to 700°C. If the drying temperature is lower than room temperature, there would be too much moisture so that the moisture on the surface and the cocatalyst may react. If it exceeds 900°C, the structure of the carrier may collapse.

The dried silica may have a concentration of hydroxy groups of 0.1 to 5 mmoles/g, preferably 0.7 to 4 mmoles/g, and more preferably 1.0 to 2 mmoles/g. If the concentration of hydroxy groups is less than 0.1 mmole/g, the amount of supported cocatalyst may be low. If it exceeds 5 mmole/g, there may arise a problem that the catalyst component may be deactivated.

The total amount of the hybrid transition metal compounds supported on a carrier may be 0.001 to 1 mmole based on 1 g of the carrier. When the content ratio of the hybrid transition metal compounds and the carrier satisfies the above range, an appropriate level of activity of the supported catalyst may be exhibited, which is advantageous from the viewpoint of maintaining the activity of the catalyst and economical efficiency.

The amount of the cocatalyst compound supported on a carrier may be 2 to 15 mmoles based on the 1 g of the carrier. When the content ratio of the cocatalyst compound and the carrier satisfies the above range, it is advantageous from the viewpoint of maintaining the activity of the catalyst and economical efficiency.

One or two or more types of a carrier may be used. For example, both the hybrid catalyst composition and the cocatalyst compound may be supported on one type of a carrier, or the hybrid catalyst composition and the cocatalyst compound may be supported on two or more types of a carrier, respectively. In addition, either one of the hybrid catalyst composition and the cocatalyst compound may be supported on a carrier.

### Process for preparing a catalyst for olefin polymerization

According to another embodiment of the present invention, there is provided a process for preparing a catalyst for olefin polymerization, which comprises (1) dissolving a compound represented by Formula 3 in a solvent; (2) adding a compound represented by Formula 5 to the solution obtained in step (1) and reacting it under stirring; (3) adding a compound represented by Formula 4 and a compound represented by Formula 6 to the solution obtained in step (2) and reacting them under stirring to obtain a first hybrid catalyst composition comprising transition metal compounds represented by Formulae 1 and 2; and (4) supporting the hybrid catalyst composition, a cocatalyst compound, or both on a carrier, wherein the equivalent ratio of the compound represented by Formula 3 added in step (1) to the compound represented by Formula 5 added in step (2) is in the range of 1:1 to 1.5:1, and the equivalent ratio of the compound represented by Formula 5 added in step (2) to the compound represented by Formula 6 added in step (3) is 1: 100 to 100:1.

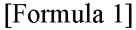

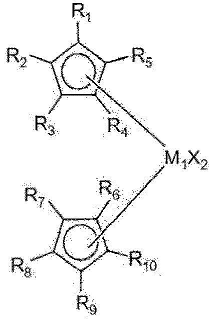

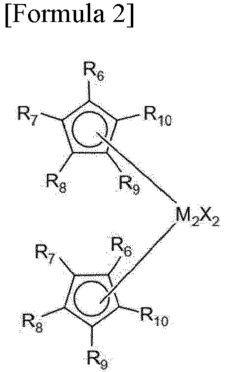

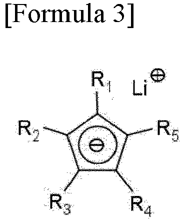

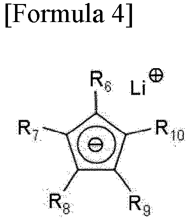

[Formula 5] M₁X₄

[Formula 6] M₂X₄

In Formulae 1 to 6, X is halogen, and M₁, M₂, R₁ to R₅ and R₆ to R₁₀ are as described above in the section of the hybrid catalyst composition comprising different transition metal compounds.

Details of steps (1) to (3) are substantially the same as steps (1) to (3) of the process for preparing a hybrid catalyst composition described above.

The process for preparing a catalyst for olefin polymerization according to an embodiment of the present invention may further comprise (3a) dissolving the first hybrid catalyst composition in a solvent; and (3b) adding a compound represented by Formula 7a, a compound represented by Formula 7b, or ammonium hydrogen fluoride (NH₄HF₂) to the solution obtained in step (3a) and reacting it under stirring to obtain a second hybrid catalyst composition comprising transition metal compounds represented by Formulae 1 and 2.

[Formula 7a] XₐMgX_{b}

[Formula 7b] X_{c}Li

In Formulae 7a and 7b, Xₐ, X_{b}, and X_{c} are as described above in the section of the process for preparing a hybrid catalyst composition.

Details of steps (3a) and (3b) are substantially the same as steps (3a) and (3b) of the process for preparing a hybrid catalyst composition described above.

The process for preparing a catalyst for olefin polymerization according to an embodiment of the present invention may further comprise (3c) drying the first hybrid catalyst composition obtained in step (3) or the second hybrid catalyst composition obtained in step (3b). Here, details of step (3c) are substantially the same as step (3c) of the process for preparing a hybrid catalyst composition described above.

In addition, the process for preparing a hybrid catalyst composition according to an embodiment of the present invention may further comprise (3d) dissolving the the first hybrid catalyst composition or the second hybrid catalyst composition dried in step (3c) in a solvent and then removing unreacted substances and/or impurities with a filter. Here, details of step (3d) are substantially the same as step (3d) of the process for preparing a hybrid catalyst composition described above.

### Step (4)

In step (4), the hybrid catalyst composition, a cocatalyst compound, or both are supported on a carrier.

As a method of supporting the hybrid catalyst composition and/or the cocatalyst compound employed in a catalyst for olefin polymerization on the carrier, a physical adsorption method or a chemical adsorption method may be used.

For example, the physical adsorption method may be a method of contacting a solution in which the hybrid catalyst composition has been dissolved with a carrier and then drying the same; a method of contacting a solution in which the hybrid catalyst composition and a cocatalyst compound have been dissolved with a carrier and then drying the same; or a method of contacting a solution in which the hybrid catalyst composition has been dissolved with a carrier and then drying the same to prepare the carrier that supports the hybrid catalyst composition, separately contacting a solution in which a cocatalyst compound has been dissolved with a carrier and then drying the same to prepare the carrier that supports the cocatalyst compound, and then mixing them.

The chemical adsorption method may be a method of supporting a cocatalyst compound on the surface of a carrier, and then supporting the hybrid catalyst composition on the cocatalyst compound; or a method of covalently bonding a functional group on the surface of a carrier (e.g., a hydroxy group (-OH) on the silica surface in the case of silica) with the hybrid transition metal compounds.

Here, the solvent used in supporting the hybrid catalyst composition and/or the cocatalyst compound is not particularly limited. For example, the solvent may comprise at least one selected from the group consisting of aliphatic hydrocarbon solvents such as hexane and pentane, aromatic hydrocarbon solvents such as toluene and benzene, hydrocarbon solvents substituted with chlorine atoms such as dichloromethane, ether-based solvents such as diethyl ether and tetrahydrofuran, acetone, and ethyl acetate.

In a preferred embodiment, the procedure in which the hybrid catalyst composition and/or the cocatalyst compound are supported on the carrier in step (4) may be carried out at a temperature of 0 to 100°C, preferably at a temperature from room temperature to 90°C.

In addition, the procedure in which the hybrid catalyst composition and/or the cocatalyst compound are supported on the carrier in step (4) may be carried out as a mixture of the hybrid catalyst composition and/or the cocatalyst compound and the carrier is sufficiently stirred for 1 minute to 24 hours, preferably 5 minutes to 15 hours.

### Polymerization of olefin

An olefinic monomer may be polymerized in the presence of the catalyst for olefin polymerization according to an embodiment of the present invention to prepare a polyolefin.

Here, the polyolefin may be a homopolymer of an olefinic monomer or a copolymer of an olefinic monomer and an olefinic comonomer.

The olefinic monomer is at least one selected from the group consisting of a C₂₋₂₀ alpha-olefin, a C₁₋₂₀ diolefin, a C₃₋₂₀ cycloolefin, and a C₃₋₂₀ cyclodiolefin.

For example, the olefinic monomer may be ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, or the like, and the polyolefin may be a homopolymer comprising only one olefinic monomer or a copolymer comprising two or more olefinic monomers exemplified above.

As an exemplary example, the polyolefin may be a copolymer in which ethylene and a C₃₋₂₀ alpha-olefin are copolymerized. Preferred is a copolymer in which ethylene and 1-hexene are copolymerized. But it is not limited thereto.

In such an event, the content of ethylene is preferably 55 to 99.9% by weight, more preferably 90 to 99.9% by weight. The content of the alpha-olefinic comonomer is preferably 0.1 to 45% by weight, more preferably 0.1 to 10% by weight.

The polyolefin according to an embodiment of the present invention may be prepared by a polymerization reaction such as free radical, cationic, coordination, condensation, and addition, but it is not limited thereto.

As a preferred example, the polyolefin may be prepared by a gas phase polymerization method, a solution polymerization method, a slurry polymerization method, or the like. When the polyolefin is prepared by a solution polymerization method or a slurry polymerization method, examples of a solvent that may be used include C₅₋₁₂ aliphatic hydrocarbon solvents such as pentane, hexane, heptane, nonane, decane, and isomers thereof; aromatic hydrocarbon solvents such as toluene and benzene; hydrocarbon solvents substituted with chlorine atoms such as dichloromethane and chlorobenzene; and mixtures thereof, but it is not limited thereto.

### Embodiments for Carrying Out the Invention

### Example

Hereinafter, the present invention will be described in detail with reference to Examples. However, the following examples are intended to further illustrate the present invention. The scope of the present invention is not limited thereto only.

### Example 1

72 mg (0.52 mmole, 1.2 eq.) of lithium pentamethylcyclopentadienide of Formula 3-1 was dissolved in 10 ml of toluene at room temperature. While it was slowly stirred, 100 mg (0.43 mmole, 1.0 eq.) of zirconium chloride (ZrCl₄) was slowly added thereto, which was stirred at 65°C for 24 hours. The temperature was lowered to -30°C, and 147 mg (1.29 mmole, 3.0 eq.) of lithium n-propylcyclopentadienide of Formula 4-1 and 137 mg (0.43 mmole, 1.0 eq.) of hafnium chloride (HfCl₄) were then added to the reaction mixture. They were reacted under stirring at room temperature for 22 hours. Lithium chloride (LiCl) was removed with a Celite filter, and the product was dried to obtain 294 mg (yield: 77%) of a mixture of the compound of Formula 1-1 ((pentamethylcyclopentadienyl)(n-propylcyclopentadienyl) zirconium dichloride) and the compound of Formula 2-1 (bis(n-propycyclopentadienyl) hafnium dichloride).

The structure of the hybrid (3:2) transition metal compounds of the compound of Formula 1-1 and the compound of Formula 2-1 was confirmed by ¹H NMR.

¹H-NMR (CDCl₃, 300 MHz) 6.18 (t, 4H), 6.09-6.08 (m, 4H), 6.02 (t, 3H), 5.95-5.93 (m, 3H), 5.89-5.87 (m, 2H), 2.65-2.55 (m, 7H), 2.02 (s, 23H), 1.60-1.52 (m, 7H), 0.95-0.90 (m, 10.5H).

### Example 2

92 mg (0.65 mmole, 10.8 eq.) of lithium pentamethylcyclopentadienide of Formula 3-1 was dissolved in 10 ml of toluene at room temperature. While it was slowly stirred, 125 mg (0.54 mmole, 9.0 eq.) of zirconium chloride (ZrCl₄) was slowly added thereto at - 30°C, which was stirred at 65°C for 12 hours. The temperature was lowered to -30°C, and 82 mg (0.72 mmole, 12.1 eq.) of lithium n-propylcyclopentadienide of Formula 4-1 and 19 mg (0.06 mmole, 1.0 eq.) of hafnium chloride (HfCl₄) were then added to the reaction mixture. They were reacted under stirring at room temperature for 7 hours. Lithium chloride (LiCl) was removed with a Celite filter, and the product was dried to obtain 189 mg (yield: 77%) of a mixture of the compound of Formula 1-1 and the compound of Formula 2-1.

The structure of the hybrid (100:7) transition metal compounds of the compound of Formula 1-1 and the compound of Formula 2-1 was confirmed by ¹H NMR.

¹H-NMR (CDCl₃, 600 MHz) 6.19 (t, 0.3H), 6.10 (t, 0.3H), 6.06 (t, 2H), 5.96 (t, 2H), 5.89-5.87 (t, 2H), 2.58 (t, 2H), 2.03 (s, 15H), 1.60-1.54 (m, 2H), 0.95-0.90 (m, 3H).

### Example 3

288 mg (0.67 mmole, 1.0 eq.) of the hybrid transition metal compounds obtained in Example 1 was dissolved in 10 ml of toluene at room temperature. It was cooled to - 30°C while it was slowly stirred. A MeMgBr (500 µl, 2.2 eq.) solution (3.0 M in diethyl ether) was slowly added thereto, followed by stirring thereof at room temperature for 3 hours to carry out the reaction. After the solvent was removed, it was dissolved in 30 ml of dichloromethane. Lithium chloride was then removed using a Celite filter. The product was dried to obtain 224 mg (yield: 88%) of a mixture of the compound of Formula 1-13 and the compound of Formula 2-13.

The structure of the hybrid (2:3) transition metal compounds of the compound of Formula 1-13 and the compound of Formula 2-13 was confirmed by ¹H NMR.

¹H-NMR (CDCl₃, 300 MHz) 5.80 (t, 4H), 5.76 (t, 2H), 5.73 (t, 4H), 5.46 (t, 2H), 2.41 (t, 6H), 1.87 (s, 15H), 1.65-1.55 (m, 6H), 1.01-0.93 (m, 9H), -0.67 (s, 6H), -0.74 (s, 6H).

The reactants and the ratio of products of the Examples are shown in Tables 1 and 2 below.

**[Table 1]**

| Example | Reactant (eq.) | | | | Product (molar ratio) | | Yield (%) |
|---|---|---|---|---|---|---|---|
| | Formula 3-1 | Formula 5-1 | Formula 4-1 | Formula 6-1 | Formula 1-1 | Formula 2-1 | |
| 1 | 1.2 | 1.0 | 3.0 | 1.0 | 3 | 2 | 77 |
| 2 | 10.8 | 9.0 | 12.0 | 1.0 | 100 | 7 | 77 |

**[Table 2]**

| Example | Reactant (eq.) | | | Product (molar ratio) | | Yield (%) |
|---|---|---|---|---|---|---|
| | Formula 1-1 | Formula 2-1 | Formula 7-1 | Formula 1-13 | Formula 2-13 | |
| 3 | 0.6 | 0.4 | 2.2 | 0.5 | 0.5 | 88 |

In the hybrid catalyst composition comprising different transition metal compounds and the catalyst for olefin polymerization comprising the same according to embodiments of the present invention, it is possible to prepare various polyolefins having excellent processability and mechanical properties depending on the content of the corresponding transition metal compounds.

### Industrial Applicability

In the hybrid catalyst composition comprising different transition metal compounds and the catalyst for olefin polymerization comprising the same according to embodiments of the present invention, it is possible to prepare various polyolefins having excellent processability and mechanical properties depending on the content of the corresponding transition metal compounds.

In addition, in the processes for preparing a hybrid catalyst composition and for preparing a catalyst for olefin polymerization comprising the same, it is possible to easily provide a catalyst for polymerization of polyolefins having excellent processability and mechanical properties by precisely controlling the ratio of the hybrid transition metal compounds.

## Claims

1. A hybrid catalyst composition comprising transition metal compounds represented by Formulae 1 and 2: 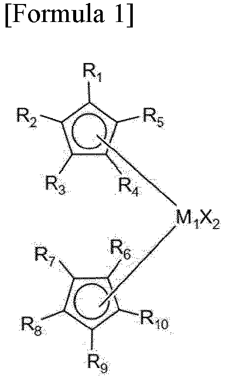 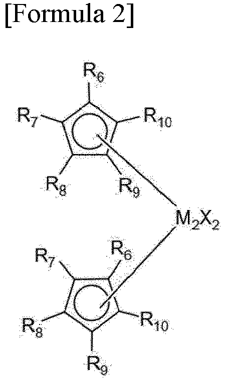
in Formulae 1 and 2, M₁ and M₂ are different from each other and each independently titanium (Ti), zirconium (Zr), or hafnium (Hf),
X is each independently halogen, C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido, or C₁₋₂₀ alkylidene, and
R₁ to R₅ and R₆ to R₁₀ are each independently hydrogen, substituted or unsubstituted C₁₋₂₀ alkyl, substituted or unsubstituted C₂₋₂₀ alkenyl, substituted or unsubstituted C₆₋₂₀ aryl, substituted or unsubstituted C₁₋₂₀ alkyl C₆₋₂₀ aryl, substituted or unsubstituted C₆₋₂₀ aryl C₁₋₂₀ alkyl, substituted or unsubstituted C₁₋₂₀ heteroalkyl, substituted or unsubstituted C₃₋₂₀ heteroaryl, substituted or unsubstituted C₁₋₂₀ alkylamido, substituted or unsubstituted C₆₋₂₀ arylamido, substituted or unsubstituted C₁₋₂₀ alkylidene, or substituted or unsubstituted C₁₋₂₀ silyl, provided that R₁ to R₅ and R₆ to R₁₀ are each independently capable of being linked to adjacent groups to form a substituted or unsubstituted, saturated or unsaturated C₄₋₂₀ ring.

2. The hybrid catalyst composition of claim 1, wherein the molar ratio of the compound represented by Formula 1 to the compound represented by Formula 2 is in the range of 100: 1 to 1:100.

3. The hybrid catalyst composition of claim 1, wherein the hybrid catalyst composition is a first hybrid catalyst composition, in which M₁ and M₂ are different from each other and are each zirconium or hafnium, X is each halogen, and R₁ to R₅ and R₆ to R₁₀ are each hydrogen, substituted or unsubstituted C₁₋₂₀ alkyl, substituted or unsubstituted C₁₋₂₀ alkenyl, or substituted or unsubstituted C₆₋₂₀ aryl.

4. The hybrid catalyst composition of claim 1, wherein the hybrid catalyst composition is a second hybrid catalyst composition, in which M₁ and M₂ are different from each other and are each zirconium or hafnium, X is each substituted or unsubstituted C₁₋₂₀ alkyl, and R₁ to R₅ and R₆ to R₁₀ are each hydrogen, substituted or unsubstituted C₁₋₂₀ alkyl, substituted or unsubstituted C₁₋₂₀ alkenyl, or substituted or unsubstituted C₆₋₂₀ aryl.

5. The hybrid catalyst composition of claim 3, wherein the transition metal compound represented by Formula 1 is at least one of the transition metal compounds represented by Formulae 1-1 to 1-12, and the transition metal compound represented by Formula 2 is at least one of the transition metal compounds represented by Formulae 2-1 to 2-12:

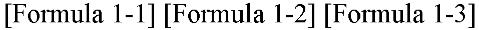

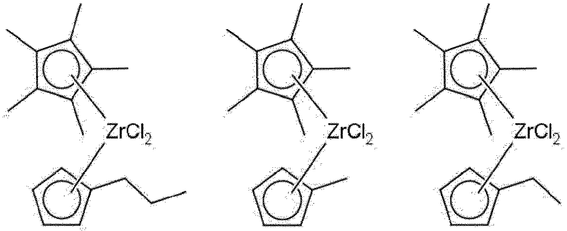

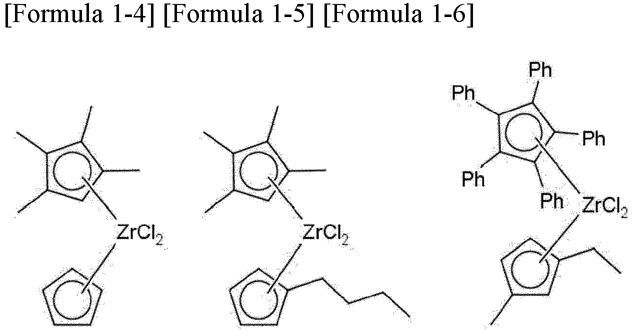

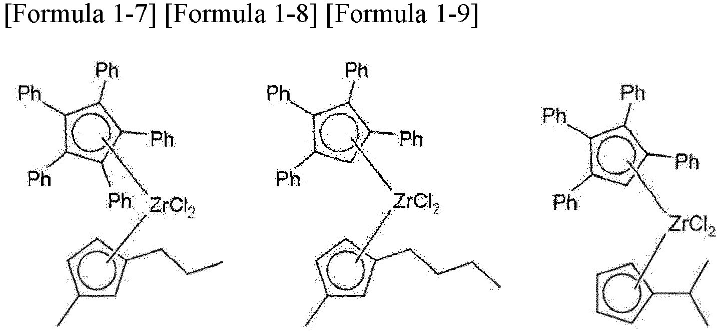

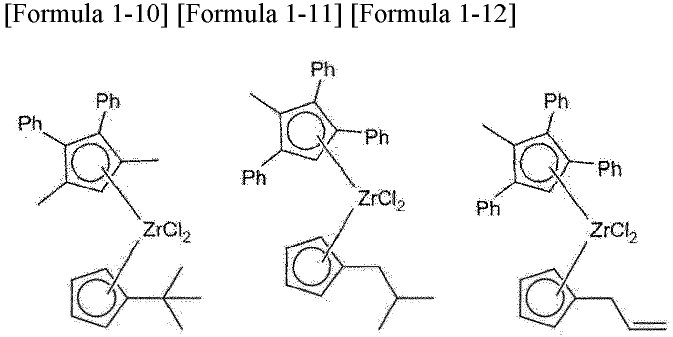

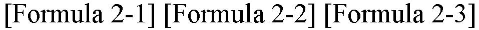

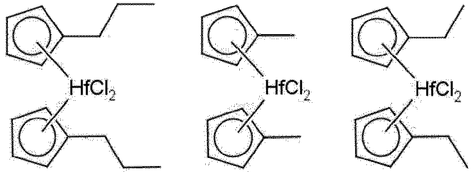

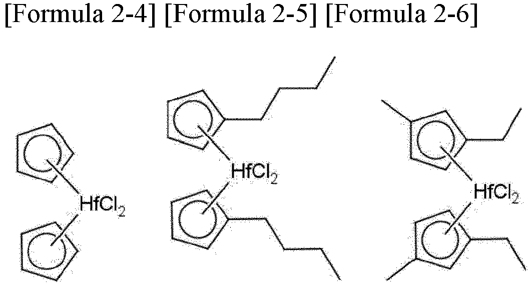

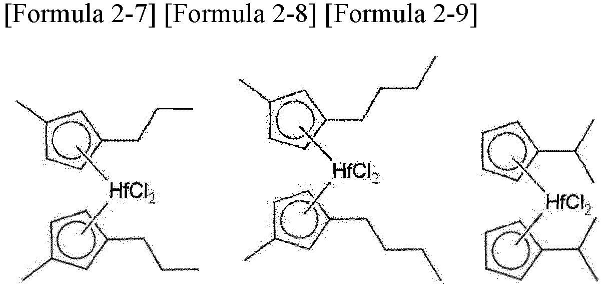

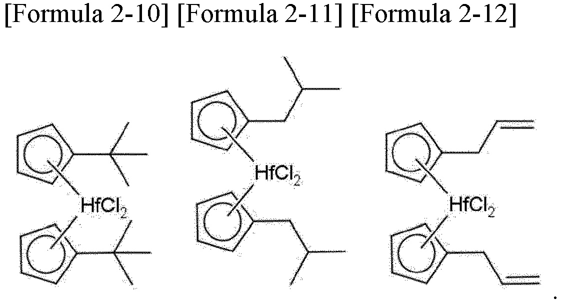

6. The hybrid catalyst composition of claim 4, wherein the transition metal compound represented by Formula 1 is at least one of the transition metal compounds represented by Formulae 1-13 to 1-24, and the transition metal compound represented by Formula 2 is at least one of the transition metal compounds represented by Formulae 2-13 to 2-24:

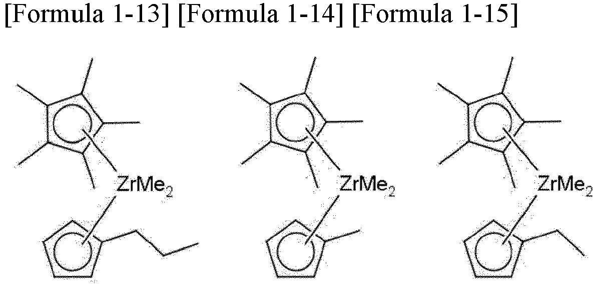

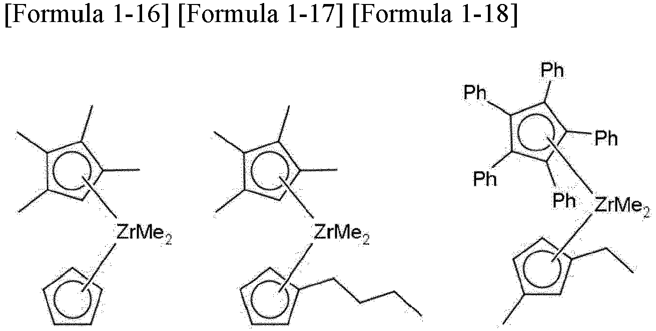

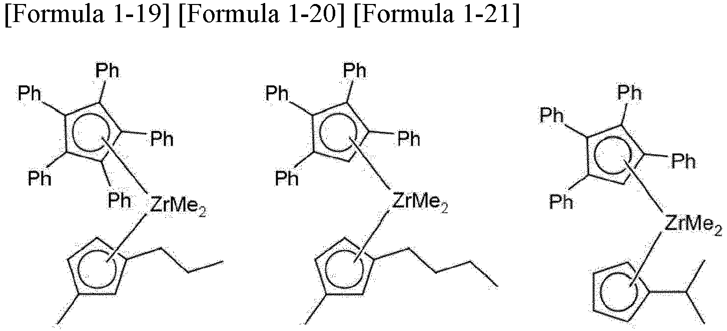

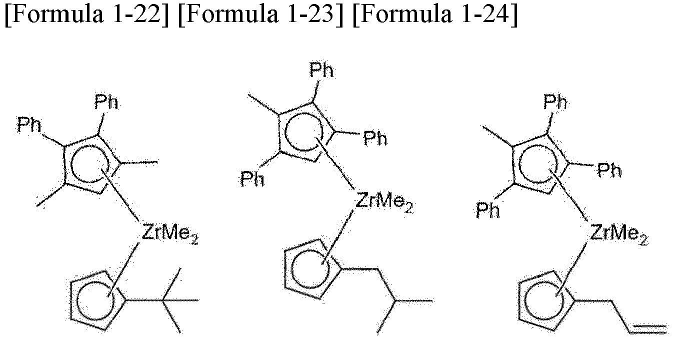

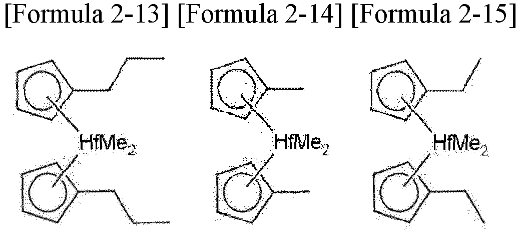

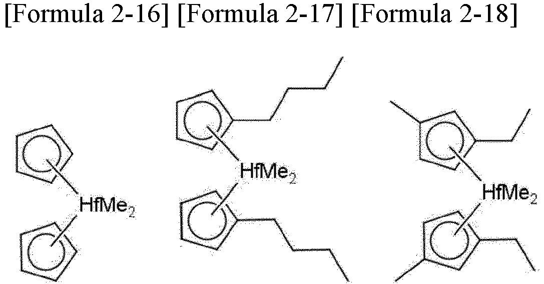

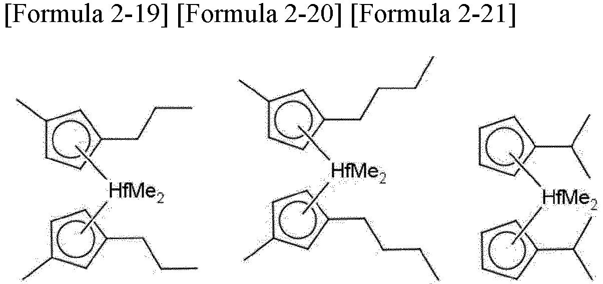

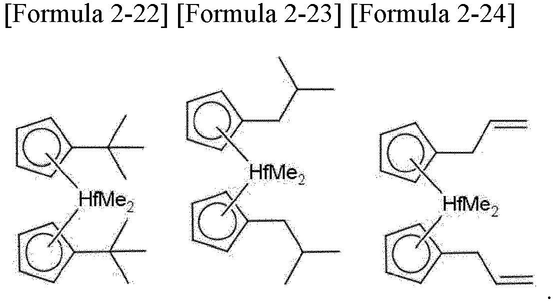

7. A process for preparing a hybrid catalyst composition, which comprises (1) dissolving a compound represented by Formula 3 in a solvent; (2) adding a compound represented by Formula 5 to the solution obtained in step (1) and reacting it under stirring; and (3) adding a compound represented by Formula 4 and a compound represented by Formula 6 to the solution obtained in step (2) and reacting them under stirring to obtain a first hybrid catalyst composition comprising transition metal compounds represented by Formulae 1 and 2, wherein the molar ratio of the compound represented by Formula 3 added in step (1) to the compound represented by Formula 5 added in step (2) is in the range of 1:1 to 1.5:1, and the equivalent ratio of the compound represented by Formula 5 added in step (2) to the compound represented by Formula 6 added in step (3) is 1:100 to 100:1: 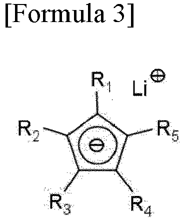 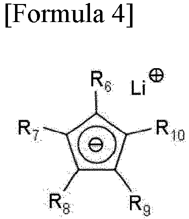
[Formula 5] M₁X₄
[Formula 6] M₂X₄
in Formulae 1 to 6, X is halogen, and M₁, M₂, R₁ to R₅ and R₆ to R₁₀ are as defined in claim 1.

8. The process for preparing a hybrid catalyst composition of claim 7, wherein the compound represented by Formula 3 is at least one of the compounds represented by Formulae 3-1 to 3-6:

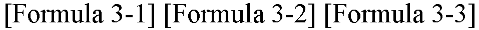

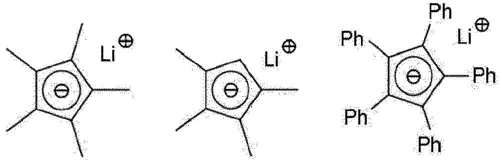

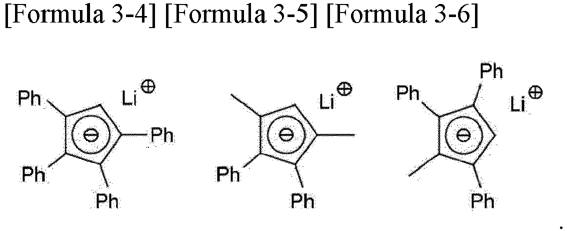

9. The process for preparing a hybrid catalyst composition of claim 7, wherein the solvent in step (1) comprises at least one selected from the group consisting of hexane, pentane, toluene, benzene, dichloromethane, diethyl ether, tetrahydrofuran, acetone, and ethyl acetate.

10. The process for preparing a hybrid catalyst composition of claim 7, wherein, in step (2), the compound represented by Formula 5 is ZrCl₄.

11. The process for preparing a hybrid catalyst composition of claim 7, wherein, in step (2), the reaction temperature is 0°C to 120°C, and the reaction time is 1 to 72 hours.

12. The process for preparing a hybrid catalyst composition of claim 7, wherein, in step (3), the compound represented by Formula 4 is at least one of the compounds represented by Formulae 4-1 to 4-12:

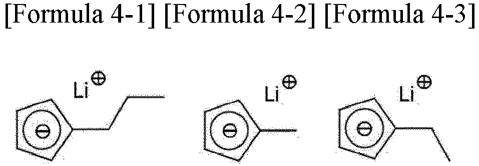

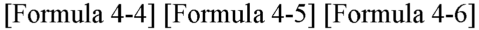

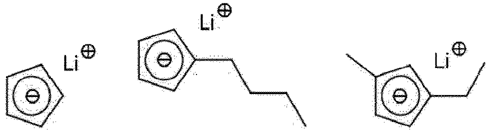

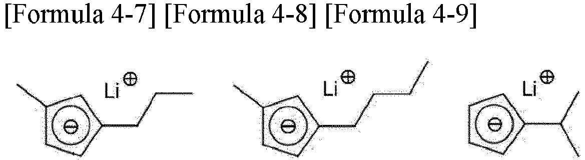

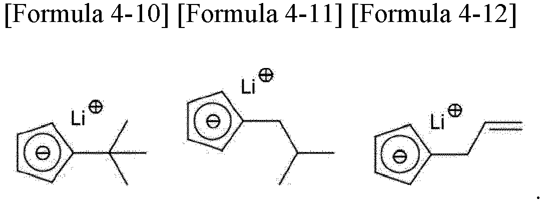

13. The process for preparing a hybrid catalyst composition of claim 7, wherein, in step (3), the compound represented by Formula 6 is HfCl₄.

14. The process for preparing a hybrid catalyst composition of claim 7, wherein, in step (3), the reaction temperature is 0°C to 120°C, and the reaction time is 1 to 72 hours.

15. The process for preparing a hybrid catalyst composition of claim 7, which further comprises (3a) dissolving the first hybrid catalyst composition in a solvent; and (3b) adding a compound represented by Formula 7a, a compound represented by Formula 7b, or ammonium hydrogen fluoride (NH₄HF₂) to the solution obtained in step (3a) and reacting it under stirring to obtain a second hybrid catalyst composition comprising transition metal compounds represented by Formulae 1 and 2:
[Formula 7a] XₐMgX_{b}
[Formula 7b] X_{c}Li
in Formulae 7a and 7b, Xₐ and X_{c} are each independently C₁₋₂₀ alkyl, C₂₋₂₀ alkenyl, C₂₋₂₀ alkynyl, C₆₋₂₀ aryl, C₁₋₂₀ alkyl C₆₋₂₀ aryl, C₆₋₂₀ aryl C₁₋₂₀ alkyl, C₁₋₂₀ alkylamido, C₆₋₂₀ arylamido, or C₁₋₂₀ alkylidene, and X_{b} is halogen.

16. The process for preparing a hybrid catalyst composition of claim 15, wherein, in step (3a), the solvent comprises at least one selected from the group consisting of hexane, pentane, toluene, benzene, dichloromethane, diethyl ether, tetrahydrofuran, acetone, and ethyl acetate.

17. The process for preparing a hybrid catalyst composition of claim 15, wherein, in step (3b), the reaction temperature is 0°C to 120°C, and the reaction time is 1 to 72 hours.

18. The process for preparing a hybrid catalyst composition of claim 7 or 15, which further comprises (3c) drying the first hybrid catalyst composition or the second hybrid catalyst composition.

19. The process for preparing a hybrid catalyst composition of claim 18, which further comprises (3d) dissolving the dried hybrid catalyst composition obtained in step (3c) in a solvent and then removing unreacted substances and/or impurities with a filter.

20. The process for preparing a hybrid catalyst composition of claim 19, wherein, in step (3d), the solvent comprises at least one selected from the group consisting of hexane, pentane, toluene, benzene, dichloromethane, diethyl ether, tetrahydrofuran, acetone, and ethyl acetate.

21. A catalyst for olefin polymerization, which comprises the hybrid catalyst composition of any one of claims 1 to 6; and a cocatalyst compound.

22. The catalyst for olefin polymerization of claim 21, wherein the cocatalyst compound is at least one selected from the group consisting of a compound represented by Formula 8, a compound represented by Formula 9, and a compound represented by Formula 10: 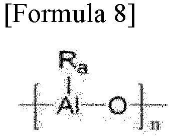 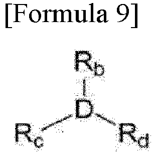
[Formula 10] [L-H]⁺[Z(A)₄]⁻ or [L]⁺[Z(A)₄]⁻
in Formula 8, n is an integer of 2 or more, and Rₐ may each independently be a halogen atom, C₁₋₂₀ hydrocarbon, or C₁₋₂₀ hydrocarbon substituted with halogen,
in Formula 9, D is aluminum (Al) or boron (B), and R_{b}, R_{c}, and R_{d} are each independently a halogen atom, C₁₋₂₀ hydrocarbon, C₁₋₂₀ hydrocarbon substituted with halogen, or C₁₋₂₀ alkoxy, and
in Formula 10, L is a neutral or cationic Lewis acid, [L-H]⁺ and [L]⁺ a Brönsted acid, Z is a group 13 element, and A is each independently substituted or unsubstituted C₆₋₂₀ aryl or substituted or unsubstituted C₁₋₂₀ alkyl.

23. The catalyst for olefin polymerization of claim 22, wherein the compound represented by Formula 8 is at least one selected from the group consisting of methylaluminoxane, ethylaluminoxane, isobutylaluminoxane, and butylaluminoxane.

24. The catalyst for olefin polymerization of claim 22, wherein the compound represented by Formula 9 is at least one selected from the group consisting of trimethylaluminum, triethylaluminum, triisobutylaluminum, tripropylaluminum, tributylaluminum, dimethylchloroaluminum, triisopropylaluminum, tri-*s*-butylaluminum, tricyclopentylaluminum, tripentylaluminum, triisopentyaluminum, trihexyaluminum, trioctyaluminum, ethyldimethylaluminum, methyldiethylaluminum, triphenylaluminum, tri-*p*-tolylaluminum, dimethylaluminummethoxide, dimethylaluminumethoxide, trimethylboron, triethylboron, triisobutylboron, tripropylboron, and tributylboron.

25. The catalyst for olefin polymerization of claim 22, wherein the compound represented by Formula 10 is at least one selected from the group consisting of triethylammonium tetraphenylborate, tributylammonium tetraphenylborate, trimethylammonium tetraphenylborate, tripropylammonium tetraphenylborate, trimethylammonium tetra(*p*-tolyl)borate, trimethylammonium tetra(*o,p-*dimethylphenyl)borate, tributylammonium tetra(*p*-trifluoromethylphenyl)borate, trimethylammonium tetra(*p*-trifluoromethylphenyl)borate, tributylammonium tetrapentafluorophenylborate, N,N-diethylanilinium tetraphenylborate, N,N-diethylanilinium tetrapentafluorophenylborate, diethylammonium tetrapentafluorophenylborate, triphenylphosphonium tetraphenylborate, trimethylphosphonium tetraphenylborate, triethylammonium tetraphenylaluminate, tributylammonium tetraphenylaluminate, trimethylammonium tetraphenylaluminate, tripropylammonium tetraphenylaluminate, trimethylammonium tetra(*p*-tolyl)aluminate, tripropylammonium tetra(*p*-tolyl)aluminate, triethylammonium tetra(*o,p-*dimethylphenyl)aluminate, tributylammonium tetra(*p*-trifluoromethylphenyl)aluminate, trimethylammonium tetra(*p*-trifluoromethylphenyl)aluminate, tributylammonium tetrapentafluorophenylaluminate, N,N-diethylanilinium tetraphenylaluminate, N,N-diethylanilinium tetrapentafluorophenylaluminate, diethylammonium tetrapentatetraphenylaluminate, triphenylphosphonium tetraphenylaluminate, trimethylphosphonium tetraphenylaluminate, tripropylammonium tetra(*p*-tolyl)borate, triethylammonium tetra(*o,p*-dimethylphenyl)borate, tributylammonium tetra(*p-*trifluoromethylphenyl) borate, triphenylcarbonium tetra(*p*-trifluoromethylphenyl)borate, and triphenylcarbonium tetrapentafluorophenylborate.

26. The catalyst for olefin polymerization of claim 21, which further comprises a carrier for supporting the hybrid catalyst composition, the cocatalyst compound, or both.

27. The catalyst for olefin polymerization of claim 26, wherein the carrier comprises at least one selected from the group consisting of silica, alumina, and magnesia.

28. The catalyst for olefin polymerization of claim 26, wherein the total amount of the hybrid transition metal compounds supported on the carrier is 0.001 to 1 mmole based on 1 g of the carrier, and the amount of the cocatalyst compound supported on the carrier is 2 to 15 mmoles based on the 1 g of the carrier.

29. A process for preparing a catalyst for olefin polymerization, which comprises (1) dissolving a compound represented by Formula 3 in a solvent; (2) adding a compound represented by Formula 5 to the solution obtained in step (1) and reacting it under stirring; (3) adding a compound represented by Formula 4 and a compound represented by Formula 6 to the solution obtained in step (2) and reacting them under stirring to obtain a first hybrid catalyst composition comprising transition metal compounds represented by Formulae 1 and 2; and (4) supporting the hybrid catalyst composition, a cocatalyst compound, or both on a carrier, wherein the equivalent ratio of the compound represented by Formula 3 added in step (1) to the compound represented by Formula 5 added in step (2) is in the range of 1:1 to 1.5:1, and the equivalent ratio of the compound represented by Formula 5 added in step (2) to the compound represented by Formula 6 added in step (3) is 1: 100 to 100:1. 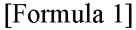 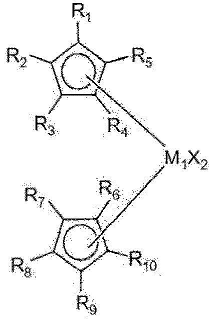 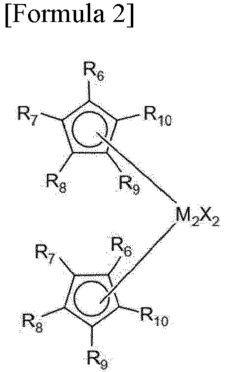 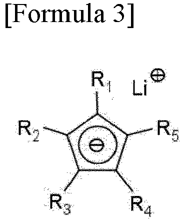 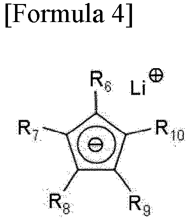
[Formula 5] M₁X₄
[Formula 6] M₂X₄
in Formulae 1 to 6, X is halogen, and M₁, M₂, R₁ to R₅ and R₆ to R₁₀ are as defined in claim 1.

30. The process for preparing a catalyst for olefin polymerization of claim 29, which further comprises (3a) dissolving the first hybrid catalyst composition in a solvent; and (3b) adding a compound represented by Formula 7a, a compound represented by Formula 7b, or ammonium hydrogen fluoride (NH₄HF₂) to the solution obtained in step (3a) and reacting it under stirring to obtain a second hybrid catalyst composition comprising transition metal compounds represented by Formulae 1 and 2:
[Formula 7a] XₐMgX_{b}
[Formula 7b] X_{c}Li
in Formulae 7a and 7b, Xₐ, X_{b}, and X_{c} are as defined in claim 15.
